# EUROPEAN PATENT APPLICATION

(11) **EP 4 768 169 A1**
(43) Date of publication of application: **01.07.2026**
(21) Application number: 25864516.7
(22) Date of filing: 21.08.2025
(51) Int. Cl.: B23K 26/21, B23K 26/08, B23K 26/066, B23K 26/16, B23K 37/04, H01M 50/528, H01M 50/152

(54) **DEVICE FOR WELDING TOP CAP OF CYLINDRICAL BATTERY CELL, AND METHOD FOR WELDING TOP CAP OF CYLINDRICAL BATTERY CELL BY USING SAME**

(30) Priority: 30.10.2024 KR 20240151236
(71) Applicant: LG ENERGY SOLUTION, LTD., Seoul 07335 (KR)
(72) Inventor: LEE, Su Ho, Daejeon 34122 (KR); AN, Jong Man, Daejeon 34122 (KR)
(74) Representative: Goddar, Heinz J.
(86) International application number: PCT/KR2025/012739
(87) International publication number: WO 2026/095288

(57) **Abstract**

Disclosed are a top cap welding apparatus for cylindrical battery cells, the top cap welding apparatus including a transfer unit configured to move a cylindrical battery case in which an electrode assembly having an outwardly exposed electrode tab is received, a pressing unit disposed in front of the battery case, the pressing unit being configured to press the battery case, a support unit disposed at the rear of the battery case, the support unit being configured to support the battery case, a top cap holder configured to locate a top cap at the rear of the electrode tab, a top cap support unit configured to support the rear of the top cap, and a welding unit configured to weld the electrode tab and the top cap to each other while pressing the electrode tab against the top cap at a predetermined pressure, and a top cap welding method for cylindrical battery cells using the same.

## Description

### [Technical Field]

This application claims the benefit of priority to Korean Patent Application No. 10-2024-0151236 filed on October 30, 2024, the disclosure of which is incorporated herein by reference in its entirety.

The present invention relates to a top cap welding apparatus for cylindrical battery cells and a top cap welding method for cylindrical battery cells using the same, and more particularly to a top cap welding apparatus for cylindrical battery cells capable of preventing welding defects when welding an electrode tab and a top cap of a cylindrical battery cell and a top cap welding method for cylindrical battery cells using the same.

### [Background Art]

With technological development of mobile devices and an increase in demand therefor, secondary batteries, which are capable of being charged and discharged, have been used as an energy source for various mobile devices. Secondary batteries have also attracted attention as an energy source for electric vehicles and hybrid electric vehicles presented as alternatives to existing gasoline and diesel vehicles, which use fossil fuels.

Depending on the shape of a battery case, secondary batteries are categorized into a cylindrical battery having an electrode assembly mounted in a cylindrical metal can, a prismatic battery having an electrode assembly mounted in a prismatic metal can, and a pouch-shaped battery having an electrode assembly mounted in a pouch-shaped case made of an aluminum laminate sheet.

Generally, a cylindrical battery cell uses a jelly-roll type electrode assembly, which is configured such that a positive electrode sheet and a negative electrode sheet are wound in the state in which a separator sheet is interposed therebetween, received in a cylindrical battery case.

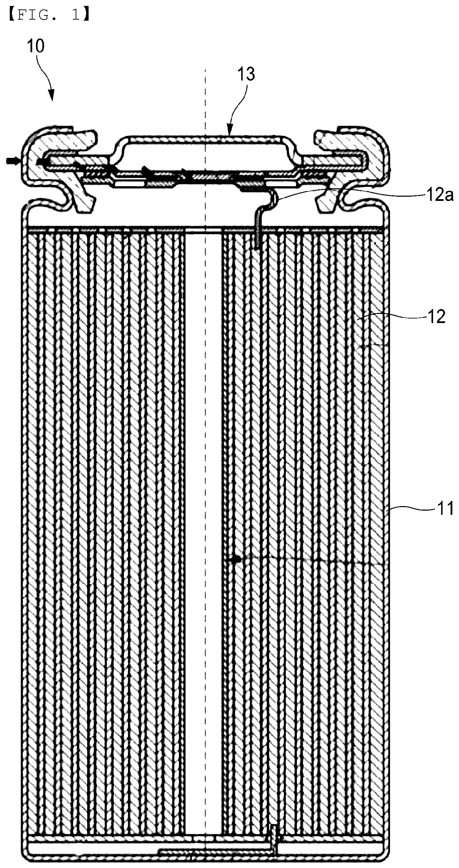

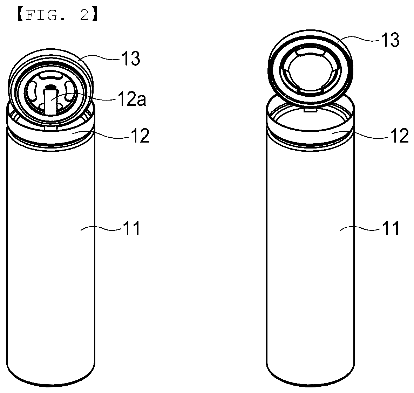

FIG. 1 is a sectional view illustrating a cylindrical battery cell, and FIG. 2 is a view illustrating the state in which an electrode tab of an electrode assembly is welded to a top cap when viewed from the front of the top cap and the rear of the top cap.

In order to manufacture the cylindrical battery cell, an electrode assembly is received in an open cylindrical battery case, a top cap is located at an upper end of the cylindrical battery case, and an electrode tab of the electrode assembly is connected to the top cap by welding.

Specifically, the cylindrical battery cell 10 includes a battery case 11 with an open top, an electrode assembly 12 received in the battery case 11, and a top cap 13 coupled to the top of the battery case 11.

The top cap 13 is located at the top of the electrode assembly 12, is electrically connected to an electrode tab 12a of the electrode assembly 12, and is coupled to the open top of the battery case 11 to seal the electrode assembly 12 received in the battery case 11.

The top cap 13 is electrically connected to the electrode tab 12a by welding. Welding is typically performed in the state in which the battery case 11 having the electrode assembly 12 received therein is pressed against the top cap 13 and the top cap 13 and the electrode tab 12a are in tight contact with each other.

However, if the electrode tab 12a and the top cap 13 are not in tight contact with each other at a predetermined position during the process of welding the electrode tab 12a and the top cap 13, a weld area may deviate from the focus of a laser beam, resulting in a weak weld.

Furthermore, if the top cap 13 is excessively pressed, a current interrupt device (CID) configured to cut off current above a certain level and a safety vent may be damaged, whereby the vent may be operated below a required threshold or functions such as preventing fire or explosion may not be performed.

### (Prior Art Documents)

(Patent Document 1) Korean Patent Application Publication No. 10-2021-0077460
(Patent Document 2) Korean Patent Application Publication No. 10-2021-0039938

### [Disclosure]

### [Technical Problem]

The present invention has been made in view of the above problems, and it is an object of the present invention to provide a top cap welding apparatus for cylindrical battery cells capable of consistently achieving tight contact between a top cap and an electrode tab of a cylindrical battery cell with the same force to prevent a weld area from deviating from the focus of a laser beam during laser welding of the top cap and the electrode tab and a top cap welding method for cylindrical battery cells using the same.

It is another object of the present invention to provide a top cap welding apparatus for cylindrical battery cells capable of minimizing damage to the top cap and reducing the maintenance expenses of the apparatus and a top cap welding method for cylindrical battery cells using the same.

### [Technical Solution]

As a technical means for achieving the above object, a top cap welding apparatus for cylindrical battery cells according to an embodiment of the present invention includes a transfer unit (100) configured to move a cylindrical battery case (11) in which an electrode assembly (12) having an outwardly exposed electrode tab (12a) is received, a pressing unit (200) disposed in front of the battery case (11), the pressing unit being configured to press the battery case (11), a support unit (300) disposed at the rear of the battery case (11), the support unit being configured to support the battery case (11), a top cap holder (400) configured to locate a top cap (13) at the rear of the electrode tab (12a), a top cap support unit (500) configured to support the rear of the top cap (13), and a welding unit (600) configured to weld the electrode tab (12a) and the top cap (13) to each other while pressing the electrode tab (12a) against the top cap (13) at a predetermined pressure.

Also, in the top cap welding apparatus for cylindrical battery cells according to the embodiment of the present invention, the welding unit (600) may include a welding mask (610) configured to press the electrode tab (12a) against the top cap (13), a welding mask support unit (620) configured to support the welding mask (610), a load sensor (630) disposed on one side of the welding mask support unit (620), the load sensor being configured to measure the value of load that the welding mask (610) applies to the electrode tab (12a), and a fourth driving unit (640) configured to drive the welding mask (610) forward or backward.

Also, in the top cap welding apparatus for cylindrical battery cells according to the embodiment of the present invention, the welding mask support unit (620) may include a second support block (621) disposed on one side of the welding mask (610), the second support block being configured to support the welding mask (610), and a height adjustment unit (622) coupled to the top of the second support block (621), the height adjustment unit being configured to adjust the vertical height of the second support block (621).

Also, in the top cap welding apparatus for cylindrical battery cells according to the embodiment of the present invention, the second support block (621) may extend from one side of the welding mask (610), one end of the second support block extending upward, and the height adjustment unit (622) may include a height adjustment member (622a) connected to an upper end of the second support block (621), the height adjustment member being configured to adjust the vertical height of the second support block (621).

Also, in the top cap welding apparatus for cylindrical battery cells according to the embodiment of the present invention, the welding mask (610) may be provided with a laser passage hole (611) configured to allow a laser for welding the electrode tab (12a) and the top cap (13) to pass therethrough, and the second support block (621) may be provided with a communication hole (621a) communicating with the laser passage hole (611).

Also, in the top cap welding apparatus for cylindrical battery cells according to the embodiment of the present invention, the welding mask support unit (620) may further include a shield gas injection unit (623) disposed in the welding mask (610), the shield gas injection unit being configured to remove debris generated during welding.

Also, in the top cap welding apparatus for cylindrical battery cells according to the embodiment of the present invention, the pressing unit (200) may include a support frame (210), and the fourth driving unit (640) may include a fourth support plate (641) fixed to the support frame (210), a third guide rail (642) disposed on an upper side of the fourth support plate (641), the third guide rail being configured to guide linear movement of the welding mask (610), a third moving block (643) coupled to the third guide rail (642) by interlocking engagement, the third moving block being configured to reciprocate along a third linear movement section provided by the third guide rail (642), a fifth support plate (644) connected to the third moving block (643), and a connection plate (645) connected to an upper side of the fifth support plate (644), the connection plate being connected to one side of the load sensor (630) .

Also, in the top cap welding apparatus for cylindrical battery cells according to the embodiment of the present invention, the fourth driving unit (640) may further include a third fixing member (646) fixedly connected to the fourth support plate (641) and a second cylinder unit (647), and the second cylinder unit (647) may include a second cylinder (647a) connected to the connection plate (645) and the third fixing member (646) therebetween, the second cylinder being configured to provide forward or backward driving force to the welding mask (610), and a second housing (647b) configured to receive the second cylinder (647a).

Also, in the top cap welding apparatus for cylindrical battery cells according to the embodiment of the present invention, the second cylinder (647a) may be connected to the third fixing member (646) to transmit forward driving force to the connection plate (645) in the other direction.

Also, in the top cap welding apparatus for cylindrical battery cells according to the embodiment of the present invention, the welding unit (600) may further include an air supply unit (650) configured to inject air into an inner space of the second housing (647b).

Also, in the top cap welding apparatus for cylindrical battery cells according to the embodiment of the present invention, the inner space of the second housing (647b) may be divided into a 2a space (647b') and a 2a' space (647b") by the second cylinder (647a), and the air supply unit (650) may include a first air supply unit (651) configured to supply air into the 2a space (647b') and a second air supply unit (652) configured to supply air into the 2a' space (647b").

Also, in the top cap welding apparatus for cylindrical battery cells according to the embodiment of the present invention, the second cylinder unit (647) may be configured such that the second cylinder (647a) is driven forward and backward by an air pressure difference between the 2a space (647b') and the 2a' space (647b").

Also, in the top cap welding apparatus for cylindrical battery cells according to the embodiment of the present invention, the second housing (647b) may be disposed on one side surface thereof with a second receiving recess (647b‴) formed so as to be depressed inward, and the fourth driving unit (640) may further include a second position detection sensor (648) disposed in the second receiving recess (647b‴), the second position detection sensor being configured to detect the position of the welding mask (610).

Also, in the top cap welding apparatus for cylindrical battery cells according to the embodiment of the present invention, the welding unit (600) may further include a fifth driving unit (660) configured to drive the welding mask (610) rearward, and the fifth driving unit may include a third contact member (661) located at a side surface of the fifth support plate (644), a part of the rear of the third contact member extending downward, a third rotary block (662) rotatably connected to a side surface of the support frame (210), the third rotary block being in contact with the downwardly extending part of the third contact member (661), and a third rod member (663) connected to one end of the third rotary block (662), the third rod member being configured to rotate the third rotary block (662) through upward and downward driving.

In addition, a top cap welding method for cylindrical battery cells using the top cap welding apparatus for cylindrical battery cells according to the embodiment of the present invention includes (S1) transferring a battery case (11) to one side or the other side through the transfer unit (100), (S2) locating a top cap (13) at the rear of an electrode tab (12a) through the top cap holder (400), (S3) supporting the rear of the top cap (13) through the top cap support unit (500), (S4) pressing the battery case (11) rearward through the pressing unit (200), and (S5) welding the top cap (13) and the electrode tab (12a) to each other through the welding unit (500).

### [Advantageous Effects]

As is apparent from the above description, in a top cap welding apparatus for cylindrical battery cells according to the present invention and a top cap welding method for cylindrical battery cells using the same, a welding mask configured to press an electrode tab against a top cap is operated by forward and backward driving of a cylinder controlled by air pressure, whereby it is possible to consistently achieve tight contact between the electrode tab and the top cap with a constant pressure.

Also, in the top cap welding apparatus for cylindrical battery cells according to the present invention and the top cap welding method for cylindrical battery cells using the same, the alignment state of the top cap can be detected through a position detection sensor configured to detect the forward driving amount of the cylinder, whereby it is possible to prevent direct tight contact between a support member configured to support the rear of the top cap and the welding mask.

Furthermore, in the top cap welding apparatus for cylindrical battery cells according to the present invention and the top cap welding method for cylindrical battery cells using the same, the alignment state of the top cap can be detected through the position detection sensor configured to detect the forward driving amount of the cylinder, whereby it is possible to restrict application of a laser beam.

### [Description of Drawings]

FIG. 1 is a cross-sectional view illustrating a cylindrical battery cell.
FIG. 2 is a view illustrating the state in which an electrode tab of an electrode assembly is welded to a top cap when viewed from the front of the top cap and the rear of the top cap.
FIG. 3 is a perspective view of a top cap welding apparatus for cylindrical battery cells according to the present invention when viewed from one side.
FIG. 4 is a perspective view of the top cap welding apparatus for cylindrical battery cells according to the present invention when viewed from the other side.
FIG. 5 is a top view of the top cap welding apparatus for cylindrical battery cells according to the present invention.
FIG. 6 is a perspective view illustrating a pressing unit constituting the top cap welding apparatus for cylindrical battery cells according to the present invention.
FIG. 7 is a perspective view illustrating a transfer unit constituting the top cap welding apparatus for cylindrical battery cells according to the present invention.
FIG. 8 is a view illustrating a pusher unit constituting the top cap welding apparatus for cylindrical battery cells according to the present invention, wherein a supplied battery case is shown as being tilted to one side.
FIG. 9 is a view illustrating the pusher unit constituting the top cap welding apparatus for cylindrical battery cells according to the present invention, wherein the supplied battery case is shown as being tilted to the other side.
FIG. 10 is an exploded sectional view of a rotary shaft constituting the top cap welding apparatus for cylindrical battery cells according to the present invention.
FIG. 11 is a view illustrating the principle of rotation of the pusher unit by a guide member in the top cap welding apparatus for cylindrical battery cells according to the present invention, wherein the supplied battery case is shown as being tilted to the other side.
FIG. 12 is an exploded sectional view of the guide member constituting the top cap welding apparatus for cylindrical battery cells according to the present invention.
FIG. 13 is a perspective view illustrating an angle adjustment unit constituting the top cap welding apparatus for cylindrical battery cells according to the present invention.
FIG. 14 is an exploded perspective view illustrating the angle adjustment unit constituting the top cap welding apparatus for cylindrical battery cells according to the present invention.
FIG. 15 is a perspective view illustrating a top cap support unit constituting the top cap welding apparatus for cylindrical battery cells according to the present invention when viewed from one side.
FIG. 16 is a perspective view illustrating the top cap support unit constituting the top cap welding apparatus for cylindrical battery cells according to the present invention when viewed from the other side.
FIG. 17 is an internal sectional view of a first cylinder unit constituting the top cap welding apparatus for cylindrical battery cells according to the present invention.
FIG. 18 is a side view illustrating forward driving of the top cap support unit constituting the top cap welding apparatus for cylindrical battery cells according to the present invention.
FIG. 19 is a side view illustrating backward driving of the top cap support unit constituting the top cap welding apparatus for cylindrical battery cells according to the present invention.
FIG. 20 is a perspective view illustrating a welding unit constituting the top cap welding apparatus for cylindrical battery cells according to the present invention when viewed from one side.
FIG. 21 is a perspective view illustrating the welding unit constituting the top cap welding apparatus for cylindrical battery cells according to the present invention when viewed from the other side.
FIG. 22 is a partial enlarged perspective view of the welding unit constituting the top cap welding apparatus for cylindrical battery cells according to the present invention when viewed from one side.
FIG. 23 is a side view illustrating forward and backward driving of the welding unit constituting the top cap welding apparatus for cylindrical battery cells according to the present invention.
FIG. 24 is an internal sectional view of a second cylinder unit constituting the top cap welding apparatus for cylindrical battery cells according to the present invention.
FIG. 25 is a view illustrating a method of a second position detection sensor detecting the position of a second cylinder when a top cap is normally located in the top cap welding apparatus for cylindrical battery cells according to the present invention.
FIG. 26 is a view illustrating a method of the second position detection sensor detecting the position of the second cylinder when the top cap is not located in the top cap welding apparatus for cylindrical battery cells according to the present invention.
FIG. 27 is a side view illustrating another method of backwardly driving the welding unit constituting the top cap welding apparatus for cylindrical battery cells according to the present invention.

### [Best Mode]

Now, preferred embodiments of the present invention will be described in detail with reference to the accompanying drawings such that the preferred embodiments of the present invention may be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a predetermined element is included does not mean that other elements are excluded, but means that such elements may be further included unless mentioned otherwise.

Hereinafter, a top cap welding apparatus for cylindrical battery cells according to the present invention and a top cap welding method for cylindrical battery cells using the same will be described.

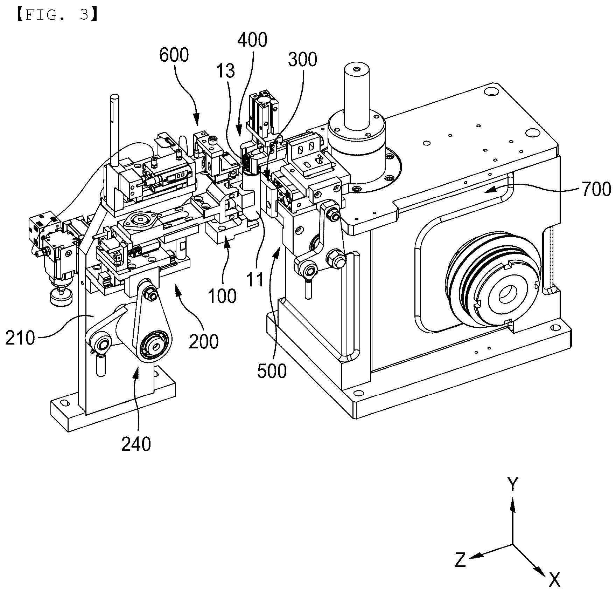

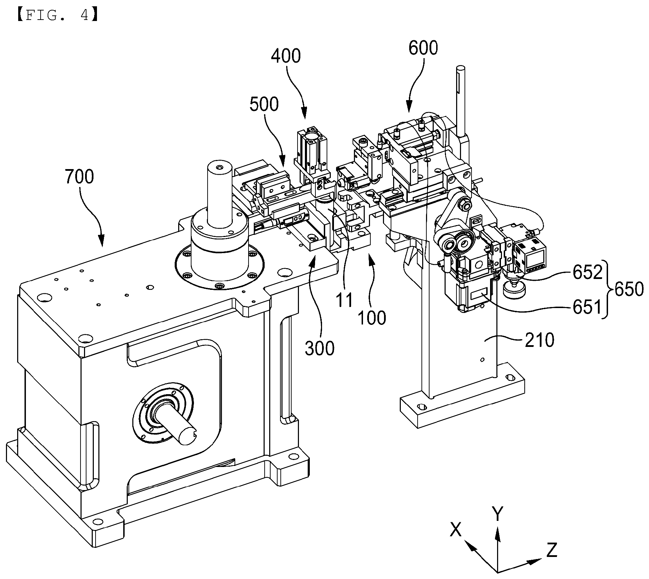

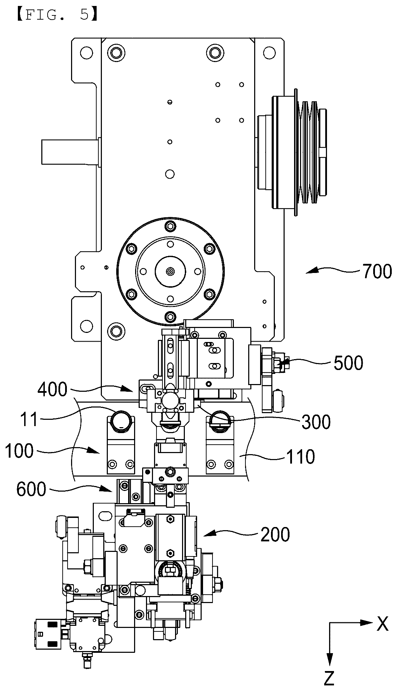

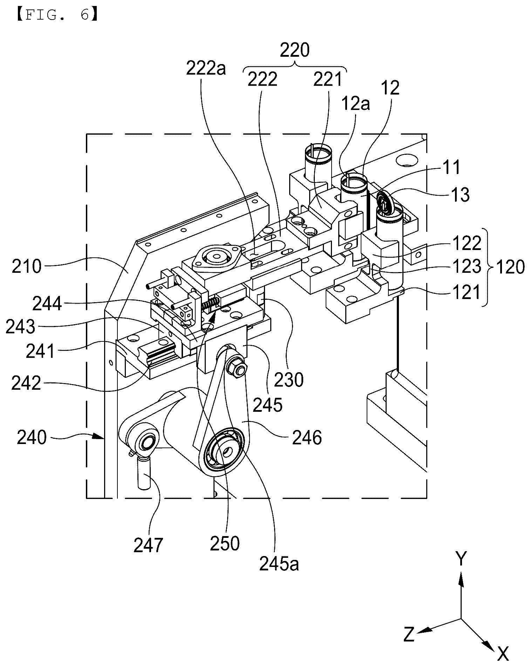

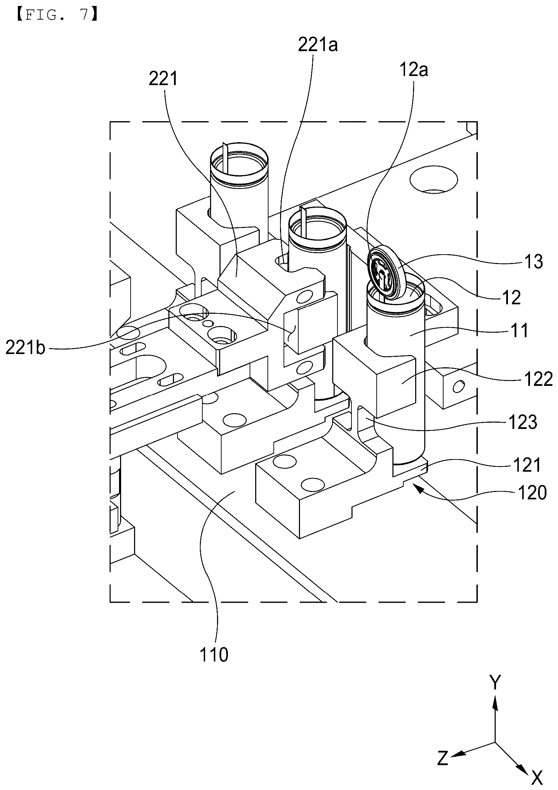

FIG. 3 is a perspective view of a top cap welding apparatus for cylindrical battery cells according to the present invention when viewed from one side, FIG. 4 is a perspective view of the top cap welding apparatus for cylindrical battery cells according to the present invention when viewed from the other side, and FIG. 5 is a top view of the top cap welding apparatus for cylindrical battery cells according to the present invention. In addition, FIG. 6 is a perspective view illustrating a pressing unit constituting the top cap welding apparatus for cylindrical battery cells according to the present invention, and FIG. 7 is a perspective view illustrating a transfer unit constituting the top cap welding apparatus for cylindrical battery cells according to the present invention.

Referring to FIGs. 3 to 7, the top cap welding apparatus for cylindrical battery cells according to the embodiment of the present invention includes a transfer unit 100, a pressing unit 200, a support unit 300, a top cap holder 400, and a top cap support unit 500, a welding unit 600, and a support body unit 700.

First, the transfer unit 100 includes a transfer line 110 and a seating unit 120, and may be configured to transfer a cylindrical battery case 11, in which an electrode assembly 12 having an outwardly exposed electrode tab 12a is received, between the pressing unit 200 and the support unit 300.

The seating unit 120 is seated on the transfer line 110, and the transfer line may be configured to transfer a battery case 11 seated on the seating unit 120 to one side (3 o'clock position in FIG. 5) or the other side (9 o'clock position in FIG. 5).

The seating unit 120 seated on the transfer line 110 may include a seating plate 121, a gripper member 122, and a connection portion 123, and may be provided in plural so as to be seated on the transfer line 110.

The seating plate 121 may be configured to allow the battery case 11 having the electrode assembly 12 received therein to be seated thereon. It is preferable for the seating plate 121 to be sized such that most (at least half) of a bottom surface of the battery case 11 is located on the seating plate 121 even if the battery case 11 is moved rearward (1 o'clock position in FIG. 7) by the pressing unit 200.

The gripper member 122 is connected to the seating plate 121 via the connection portion 123, and may be configured to support a part of the battery case 11.

More specifically, the gripper member 122 may be configured to wrap around a part of a circumferential surface of the battery case 11. For example, the gripper member 122 may be configured to support one side (5 o'clock position in FIG. 6) or the other side (11 o'clock position in FIG. 6) of the battery case 11 seated on the seating plate 121.

In this case, the gripper member 122 is formed so as to wrap around a part of the front (7 o'clock position in FIG. 7) of the battery case 11 at which the pressing unit 200 is located, and the rear (1 o'clock position in FIG. 7) thereof may be open.

The connection portion 123 is configured to connect the seating plate 121 and the gripper member 122 to each other, and may be sized such that a part of the pusher member 221 of the pressing unit 200 can pass therethrough. A detailed description thereof will be given later.

Meanwhile, the transfer line 110 may transfer the battery case 11 by a predetermined distance and maintain a temporarily stationary state. Here, the predetermined distance corresponds to the pitch, i.e., the spacing between seating units 120 seated on the transfer line 110.

In addition, the stationary state of the transfer line 110 may be maintained for the time during which a welding process between the electrode tab 12a of the battery case 11 and a top cap 13 is performed.

The transfer line 110 may be configured as a conveyor belt; however, the present invention is not limited thereto.

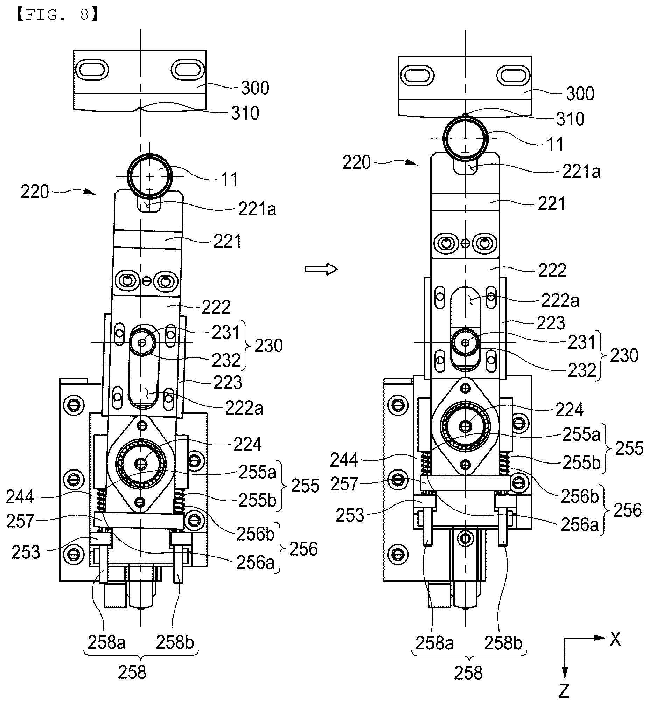

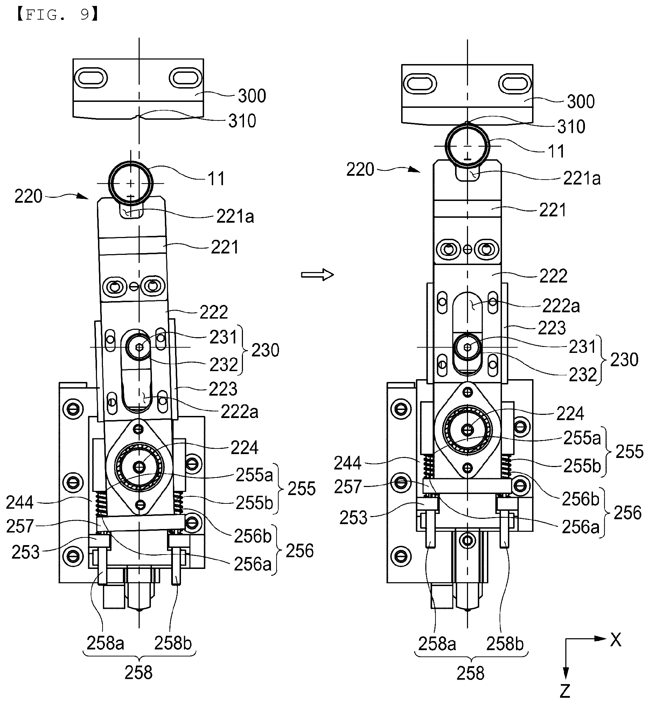

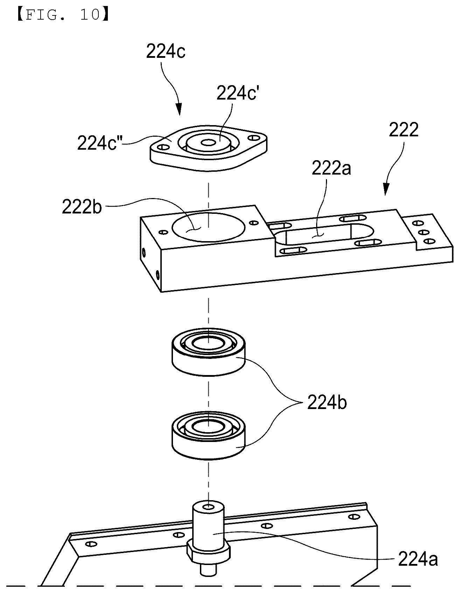

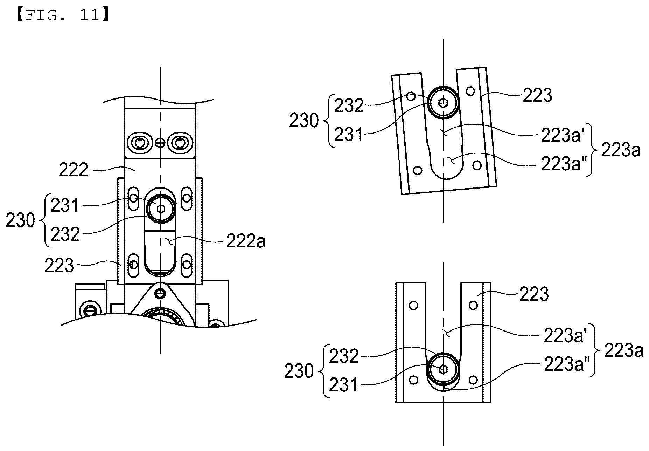

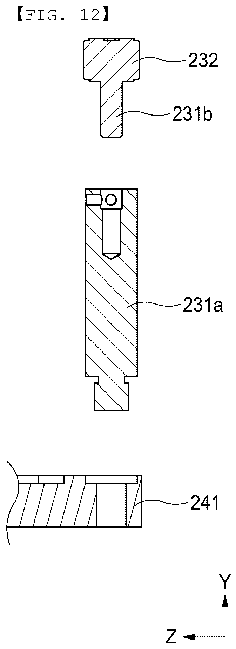

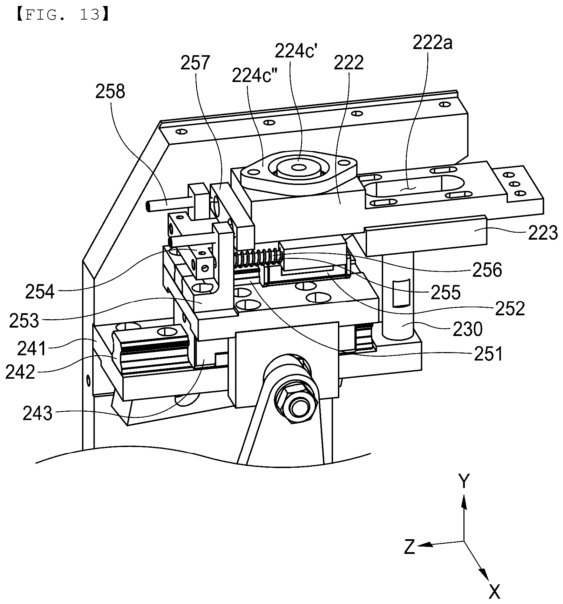

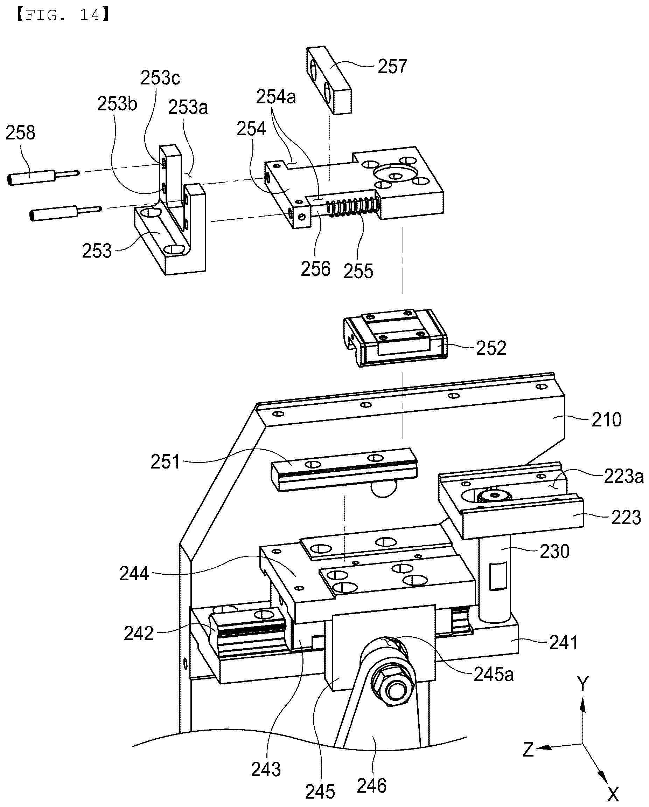

FIG. 8 is a view illustrating a pusher unit constituting the top cap welding apparatus for cylindrical battery cells according to the present invention, wherein the supplied battery case is shown as being tilted to one side, FIG. 9 is a view illustrating the pusher unit constituting the top cap welding apparatus for cylindrical battery cells according to the present invention, wherein the supplied battery case is shown as being tilted to the other side, and FIG. 10 is an exploded sectional view of a rotary shaft constituting the top cap welding apparatus for cylindrical battery cells according to the present invention. In addition, FIG. 11 is a view illustrating the principle of rotation of the pusher unit by a guide member in the top cap welding apparatus for cylindrical battery cells according to the present invention, wherein the supplied battery case is shown as being tilted to the other side, and FIG. 12 is an exploded sectional view of the guide member constituting the top cap welding apparatus for cylindrical battery cells according to the present invention. In addition, FIG. 13 is a perspective view illustrating an angle adjustment unit constituting the top cap welding apparatus for cylindrical battery cells according to the present invention, and FIG. 14 is an exploded perspective view illustrating the angle adjustment unit constituting the top cap welding apparatus for cylindrical battery cells according to the present invention.

Referring to FIGs. 3 to 14, the pressing unit 200 is located in front (8 o'clock position in FIG. 6) of the battery case 11 so as to press the battery case 11, and may include a support frame 210, a pusher unit 220, a guide member 230, a first driving unit 240, and an angle adjustment unit 250.

The pressing unit 200 is located in front of the battery case 11 (6 o'clock position in FIG. 5), and may be configured to perform forward and backward driving to press the battery case 11 firmly against the support unit 300 located at the rear. Here, in the forward and backward driving of the pressing unit 200, forward driving is driving for movement toward the battery case 11 (movement to the 12 o'clock position in FIG. 5), and backward driving is driving for movement away from the battery case 11 (movement to the 6 o'clock position in FIG. 5).

The support frame 210 is located in front (8 o'clock position in FIG. 6) of the transfer unit 100, which transfers the battery case 11, and may be configured to support the pusher unit 220, the guide member 230, the first driving unit 240, and the angle adjustment unit 250.

The pusher unit 220 may be connected to the support frame 210 via the angle adjustment unit 250 so as to be located in front of the battery case 11. The pusher unit 220 may include a pusher member 221, a centering member 222, a guide block 223, and a rotary shaft 224.

The pusher member 221 may be configured to press the battery case 11 in contact with a part of the battery case 11. The pusher member 221 may be configured to transmit pressing force to the battery case 11 such that the battery case 11 is moved rearward (12 o'clock position in FIG. 8).

The pusher member 221 may be provided in the other surface (12 o'clock position in FIG. 8) thereof contacting the battery case 11 with a first recess 221a, into which a part of the battery case 11 is inserted. Here, the first recess 221a of the pusher member 221 is formed as the result of a part of the pusher member being depressed inward (6 o'clock position in FIG. 8) such that a part of the battery case 11 is inserted thereinto, and the width of the first recess 221a may be configured to be less than the outer diameter of the battery case 11.

The part at which the other surface (12 o'clock position in FIG. 8) of the pusher member 221 and the first recess 221a are connected to each other may be formed in a round shape. In another example, the part at which the other surface of the pusher member 221 and the first recess 221a are connected to each other may be formed in an inclined shape corresponding to the curvature of the battery case 11.

In this case, the part at which the other surface of the pusher member 221 and the first recess 221a are connected to each other may be formed so as to have a curvature or inclination corresponding to the curvature of the battery case 11; however, the present invention is not limited thereto, and the part may be formed in various shapes that do not damage the battery case 11 when the pusher member 221 presses the battery case 11.

In particular, as shown in FIGs. 8 and 9, even if the battery case 11 supplied by the transfer unit 100 deviates from the central axis of the pusher member 221, a pair of curved portions or inclined portions to which the first recess 221a is connected has a structure that can be pressed firmly against the battery case 11. Even when the pusher member 221 is driven forward, therefore, the battery case 11 is not rotated, and damage to the battery case, such as scratches, may be reduced.

In order words, if only a part of the pair of curved portions or inclined portions, to which the first recess 221a is connected, is pressed firmly against the battery case 11, the battery case 11 may be rotated in a direction in which there is no tight contact therebetween when the pusher member 221 is driven forward, which may cause misalignment between the electrode tabs and significantly increase the possibility of scratches.

In addition, the pusher member 221 may be provided in the other surface (1 o'clock position in FIG. 7) thereof contacting the battery case 11 with a second recess 221b, into which a part of the gripper member 122 is inserted.

The second recess 221b may be depressed to a width greater than the size of the gripper member 122 such that a part of the gripper member 122 is inserted thereinto when the pusher member 221 is driven forward (1 o'clock position in FIG. 7) to press the battery case 11 in contact with a part of the battery case 11.

In addition, it is preferable for the second recess 221b to be depressed to a depth equal to or greater than the distance by which the battery case 11 is moved rearward such that the battery case 11 can be pressed without interference with the gripper member 122.

Furthermore, the pusher member 221 may be separated into an upper member and a lower member based on the second recess 221b, wherein the lower member may be provided with a recess, into which a part of the connection portion 123 is inserted. The recess formed in the lower member may also be depressed to a depth equal to or greater than the distance by which the battery case 11 is moved rearward.

The centering member 222 is connected to one side (8 o'clock position in FIG. 6) of the pusher member 221, wherein a first hole 222a may be formed in the centering member 222 at a position corresponding to a guide recess 223a of the guide block 223, and a second hole 222b may be formed in one end of the centering member such that the rotary shaft 224 of the pusher unit 220 is inserted into the second hole.

For example, the first hole 222a may be formed with a size corresponding to the width of the guide recess 223a so as to confirm the position of the guide member 230, a part of which is inserted into the guide recess 223a.

The centering member 222 may be configured to connect the rotary shaft 224 and the pusher member 221 to each other such that the pusher member 221 is rotated by the rotary shaft 224 inserted into the second hole 222b. That is, the centering member 222 and the pusher member 221 may be rotated about the rotary shaft 224.

The guide block 223 is provided under the centering member 222, and the guide recess 223a may be formed so as to correspond to the first hole 222a in the centering member 222. A part of the guide member 230 may be inserted into the guide recess 223a, and the guide recess 223a may be formed such that the pusher unit 220 is driven forward and backward along the guide member 230. In other words, the guide recess 223a may be formed in the direction in which the pusher unit 220 is driven forward and backward.

The guide recess 223a may include a clearance portion 223a' having a width greater than the outer diameter of the guide member 230 and an alignment portion 223a" having a width corresponding to the outer diameter of the guide member 230.

Here, the clearance portion 223a' is formed so as to be located closer to the pusher member 221 than the alignment portion 223a", and a more detailed description of the clearance portion 223a' and the alignment portion 223a" will be given later.

The rotary shaft 224 may be inserted into the second hole 222b formed in one end of the centering member 222 such that the pusher unit 220 can be rotated about the rotary shaft 224 in a transfer direction.

The rotary shaft 224 may include a central shaft member 224a, a first bearing member 224b configured to wrap around an outer circumferential surface of the shaft member 224a, and a shaft cover 224c configured to cover the top of the second hole 222b.

In this case, the second hole 222b may be formed with a hole size corresponding to the outer diameter of the first bearing member 224b to allow insertion of the first bearing member 224b.

Although each of the second hole 222b and the first bearing member 224b are shown as having a round shape in the figures, the second hole 222b and the first bearing member 224b may also be formed in mutually corresponding polygonal shapes so as to be rotatable about the shaft member 224a together. Accordingly, the first bearing member 224b may be inserted into and coupled to the second hole 222b, whereby the pusher unit 220 may be rotated with the first bearing member 224b about the shaft member 224a. In this case, the first bearing member 224b may be provided in multiple rows so as to correspond to the formation height of the second hole 222b.

The shaft cover 224c may be coupled to one end of the centering member 222 so as to cover an upper side of the second hole 222b. The shaft cover 224c is formed so as to have a size greater than the outer diameter of the first bearing member 224b, i.e., the hole size of the second hole 222b, to prevent escape of the shaft member 224a inserted through the second hole 222b and the first bearing member 224b, and may seal the upper opening of the second hole 222b.

For example, the shaft cover 224c may include a first cover 224c' configured to prevent escape of the shaft member 224a and an inner ring (inside ring member) of the first bearing member 224b and a second cover 224c" configured to prevent escape of an outer ring (outside ring member) of the first bearing member 224b. In this case, the first cover 224c' may have a diameter greater than the inner diameter of the inner ring of the first bearing member 224b and less than the outer diameter of the inner ring, and the second cover 224c" may have an inner diameter greater than the inner diameter of the outer ring of the first bearing member 224b and an outer diameter greater than the outer diameter of the outer ring.

A part of the guide member 230 is inserted into the guide recess 223a, and the guide member is configured to guide the guide block 223. Specifically, a guide shaft 231 may include a first guide shaft 231a having one side connected to the first support plate 241 and a second guide shaft 231b having one side connected to the other side to the first guide shaft 231a, wherein the first guide shaft 231a and second guide shaft 231b may be detachably attached to each other. Of course, the guide member 230 may be a single guide shaft in which the first guide shaft 231a and the second guide shaft 231b are integrated.

The second bearing member 232 may be located so as to wrap around a part of the other side of the second guide shaft 231b, thereby minimizing friction with the guide recess 223a configured to guide the guide block 223.

During forward and backward driving of the pusher unit 220, the guide member 230 may allow rotation of the pusher unit 220 about the rotary shaft 224 by the distance between the outer diameter of the guide member 230 and the width of the clearance portion 223a' when located at the clearance portion 223a' of the guide recess 223a, and may prevent rotation of the pusher unit 220 about the rotary shaft 224 when located in the alignment portion 223a" of the guide recess 223a.

In other words, when the guide member 230 is located at the clearance portion 223a', the pusher unit 220 may be rotated about the rotary shaft 224, and when the guide member 230 is located at the alignment portion 223a", the pusher unit 220 may not be rotated about the rotary shaft 224.

Accordingly, even if the transferred battery case 11 deviates from a predetermined position, the battery case 11 may be moved to the predetermined position by the guide recess 223a and the guide member 230. That is, when the pusher member 221 is driven forward, the guide recess 223a is guided by the guide member 230, whereby the battery case 11 is moved forward while the position thereof is aligned.

The first driving unit 240 may be connected to one side (8 o'clock position in FIG. 6) of the pusher unit 220 to drive the pusher unit 220 forward or backward. The first driving unit 240 may include a first support plate 241, a first guide rail 242, a first moving block 243, a second support plate 244, a first contact member 245, a first rotary block 246, and a first rod member 247.

The first support plate 241 may be fixed to the support frame 210. In this case, the first support plate 241 may be fixed in a direction orthogonal to the support frame 210 (x-axis direction), and the first guide rail 242 and the guide member 230 may be seated on and fixed to an upper surface of the first support plate 241.

The first guide rail 242 is provided on an upper side of the first support plate 241, and may be configured to guide the linear movement of the pusher unit 220. Here, the linear movement of the pusher unit 220 may be linear movement in a forward-backward driving direction (z-axis direction) of the pusher unit 220, which is orthogonal to a transfer direction (x-axis direction) in which the battery case 11 is transferred.

The first guide rail 242 may be formed in the shape of a straight rail extending in the forward-backward driving direction of the pusher unit 220.

The first moving block 243 may be coupled to the first guide rail 242 by interlocking engagement or male-female coupling so as to slidably reciprocate along a first linear movement section provided by the first guide rail 242. Here, the first linear movement section may be a section corresponding to the extension length of the first guide rail 242 or a section corresponding to the reciprocating length of the pusher unit 220 by which the pusher unit 220 is driven in the forward-backward direction to press the battery case 11.

The second support plate 244 is connected to the first moving block 243, and when the first moving block 243 is linearly moved relative to the first guide rail 242, the second support plate 244 may also be linearly moved relative to the first guide rail 242 together with the first moving block 243.

The angle adjustment unit 250 is seated on an upper surface of the second support plate 244, and the first contact member 245 may be connected to a side surface of the second support plate 244.

The first contact member 245 is located at a side surface (5 o'clock position in FIG. 6) of the second support plate 244, and is provided in a lower edge thereof with a cutout portion 245a that is open downward.

Here, the first contact member 245 may also be linearly moved relative to the first guide rail 242 together with the first moving block 243.

The first rotary block 246 is rotatably connected to a side surface (5 o'clock position in FIG. 6) of the support frame 210, and a part of the first rotary block may be inserted into the cutout portion 245a of the first contact member 245.

The first rotary block 246 may be configured to come into contact with a part of the cutout portion 245a of the first contact member 245 through rotation. When the first rotary block 246 is rotated forward (2 o'clock position in FIG. 6) in contact with the cutout portion 245a, the first rotary block may move the first contact member 245 forward.

In addition, when the first rotary block 246 is rotated rearward (8 o'clock position in FIG. 6) in contact with the cutout portion 245a, the first rotary block may move the first contact member 245 rearward.

The first rod member 247 is connected to one end of the first rotary block 246, and the first rotary block 246 may be rotated by upward and downward driving of the first rod member 247.

For example, when the first rod member 247 is driven in an upward direction, the first rotary block 246 may be rotated forward to move the first contact member 245 to the front, and the first moving block 243 may be linearly moved forward relative to the first guide rail 242 by forward driving of the first contact member 245.

In addition, for example, when the first rod member 247 is driven in a downward direction, the first rotary block 246 may be rotated rearward to move the first contact member 245 to the rear, and the first moving block 243 may be linearly moved rearward relative to the first guide rail 242 by rearward driving of the first contact member 245.

That is, as the first rotary block 246 is rotated by upward and downward driving of the first rod member 247, the first contact member 245 may be driven forward and backward, and the first moving block 243 connected to the first contact member 245 may also be linearly moved forward and backward relative to the first guide rail 242.

The angle adjustment unit 250 may be provided between the first driving unit 240 and the pusher unit 220 to adjust the pressing force and angle of the pusher unit 220.

The angle adjustment unit 250 may include a second guide rail 251, a second moving block 252, a first fixing member 253, a connection block 254, a support shaft 255, an elastic member 256, a second fixing member 257, and a bolt member 258.

First, the second guide rail 251 is provided on an upper side of the first driving unit 240, and may be configured to guide the linear movement of the pusher unit 220. More specifically, the second guide rail 251 may be provided on an upper side of the second support plate 244.

In addition, the second guide rail 251 is provided parallel to the first guide rail 242, and may be formed in the shape of a straight rail extending in the forward-backward driving direction (z-axis direction) of the pusher unit 220.

The second moving block 252 may be coupled to the second guide rail 251 by interlocking engagement so as to reciprocate along a second linear movement section provided by the second guide rail 251. Here, the second linear movement section may be a section corresponding to the extension length of the second guide rail 251 or a section corresponding to the length corresponding to the pressing force when the pusher unit 220 presses the battery case 11.

For example, the length corresponding to the pressing force may be the distance by which the pusher unit 220 is moved rearward (9 o'clock position in FIG. 13) in response to the pressing force of the pusher unit 220 when the pusher unit 220 presses the battery case 11.

The second moving block 252 may be coupled to the second guide rail 251 by interlocking engagement or male-female coupling so as to be linearly movable relative to the second guide rail, and may slide relative to the second guide rail 251.

The first fixing member 253 may be fixed to an upper side of the first driving unit 240. In other words, a lower end of the first fixing member 253 may be fixed to the second support plate 244.

In this case, the first fixing member 253 may be provided with a third recess 253a, into which a part of the connection block 254 is inserted. For example, the third recess 253a is formed as the result of a part of the first fixing member 253 being depressed downward from an upper side thereof, and a part of the connection block 254 may be configured to be movable forward and backward relative to the third recess 253a.

In addition, the first fixing member 253 may be provided in both side edges thereof with a third hole 253b, through which the support shaft 255 extends, and a fourth hole 253c, through which the bolt member 258 extends.

The connection block 254 is provided on an upper side of the second moving block 252, wherein one side of the connection block is located on one side of the first fixing member 253 and the other side of the connection block is located on the other side of the first fixing member 253. Specifically, the connection block 254 has an approximately hexahedral shape and is provided in both side edges thereof with a pair of second cutout portions 254a formed so as to be depressed inward. A part of the connection block 254 may be located in front of the first fixing member 253, and a part of the connection block may be located at the rear of the first fixing member 253, due to the second cutout portions 254a and the third recess 253a of the first fixing member 253.

In addition, a part of the connection block 254 is connected and coupled to the upper side of the second moving block 252.

The support shaft 255 extends through the first fixing member 253, and may be provided in a pair such that both ends thereof extends from the front to the rear of the pair of second cutout portions 254a.

Specifically, referring to FIGs. 8 and 14, a first support shaft 255a extends through the third hole 253b formed in the edge of one side of the first fixing member 253, and both ends of the first support shaft are connected to a pair of facing inner surfaces of the second cutout portion 254a. In addition, a second support shaft 255b extends through the other third hole 253b formed on the edge of the other side of the first fixing member 253, and both ends of the second support shaft are connected to a pair of facing inner surfaces of the other second cutout portion 254a.

The elastic member 256 includes a first elastic member 256a wrapping around the outside of the first support shaft 255a and a second elastic member 256b wrapping around the outside of the second support shaft 255b. The elastic member 256 may be configured to provide forward (3 o'clock position in FIG. 13) elastic force to the pusher unit 220 moving rearward (9 o'clock position in FIG. 13) in response to the pressing force of the pusher unit 220 when the pusher unit 220 presses the battery case 11.

Here, it is preferable for the third holes 253b formed in the both side edges of the first fixing member 253 to be sized such that the support shaft 255 can extend therethrough but the elastic member 256 cannot extend therethrough.

The second fixing member 257 is coupled to one side (9 o'clock position in FIG. 13) of the pusher unit 220, and the bolt member 258 may be inserted into and connected to the first fixing member 253 so as to be in contact with the second fixing member 257.

The bolt member 258 may include a first bolt member 258a and a second bolt member 258b connected respectively to the both side edges of the first fixing member 253.

Referring to FIGs. 8 and 9, the first bolt member 258a may be inserted into and connected to a 9 o'clock edge of the first fixing member 253 so as to be in contact with one end of the second fixing member 257, and the second bolt member 258b may be inserted into and connected to a 3 o'clock edge of the first fixing member 253 so as to be in contact with one end of the second fixing member 257.

At this time, the bolt member 258 may be inserted into and connected to the first fixing member 253 through the fourth hole 253c formed in the both side edges of the first fixing member 253.

Therefore, the angle adjustment unit 250 may be used to manually adjust the angle of the pusher unit 220 based on the difference between the length of the first bolt member 258a protruding from the fourth hole 253c of the first fixing member 253 and the length of the second bolt member 258b protruding from the fourth hole 253c of the first fixing member 253.

The support unit 300 is located at the rear (12 o'clock position in FIG. 8) of the battery case 11, and may be configured to support the battery case 11 moved rearward by the pressing unit 200.

The support unit 300 may be provided in one surface (6 o'clock position in FIG. 8) thereof contacting the battery case 11 with a fourth recess 310 depressed to the other side (12 o'clock position in FIG. 8) such that the battery case 11 is seated therein.

The support unit 300 allows the battery case 11 moved rearward by the pressing unit 200 to be seated in the fourth recess 310 while the angle or distance between the electrode tab 12a and the top cap 13 is controlled, and therefore the electrode tab 12a of the battery case 11 may be tightly attached (seated) at a more accurate position, minimizing welding defects between the electrode tab 12a and the top cap 13.

The top cap holder 400 may be configured to locate the top cap 13 at the rear of the electrode tab 12a. The top cap holder 400 may include a jig unit 410 configured to hold the top cap 13 and a driving unit 420 configured to locate the jig unit 410 at the rear of the electrode tab 12a. The top cap holder 400 may be provided by various means obvious to those skilled in the art, and a more detailed description thereof will therefor be omitted.

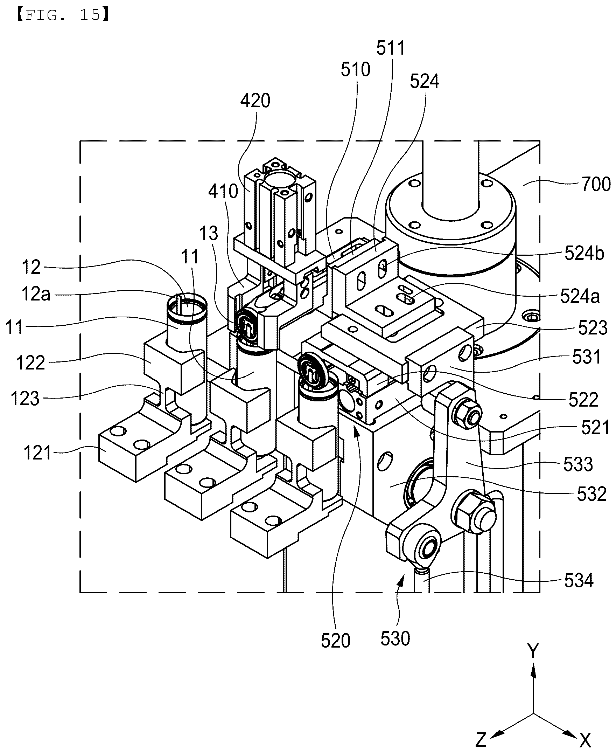

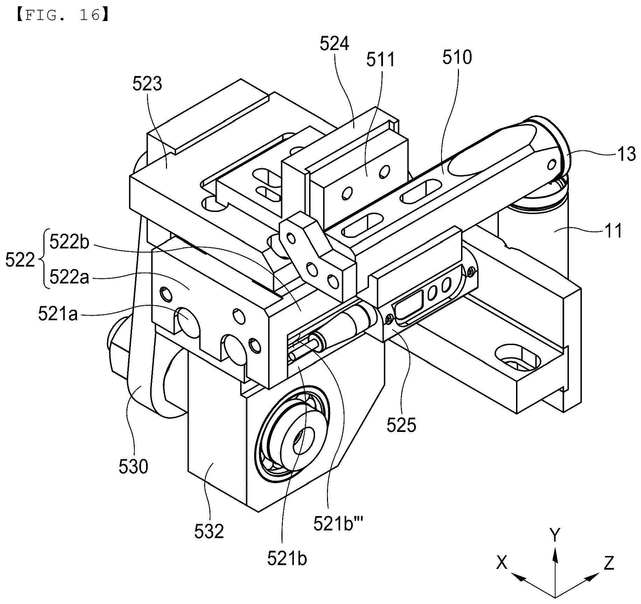

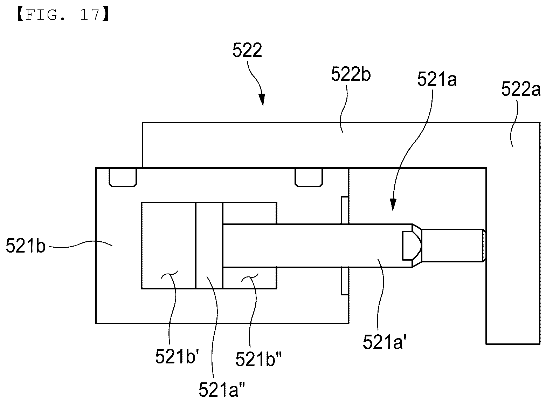

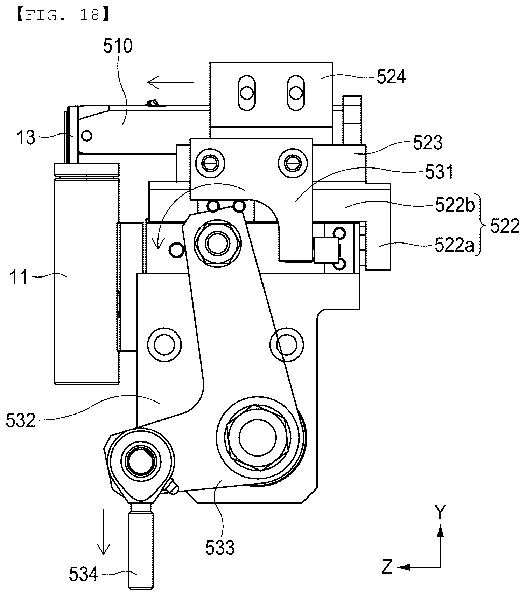

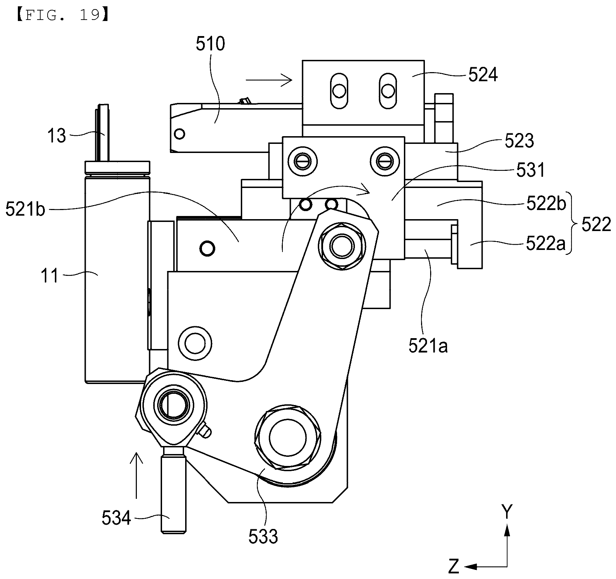

FIG. 15 is a perspective view illustrating the top cap support unit constituting the top cap welding apparatus for cylindrical battery cells according to the present invention when viewed from one side, and FIG. 16 is a perspective view illustrating the top cap support unit constituting the top cap welding apparatus for cylindrical battery cells according to the present invention when viewed from the other side. In addition, FIG. 17 is an internal sectional view of a first cylinder unit constituting the top cap welding apparatus for cylindrical battery cells according to the present invention, FIG. 18 is a side view illustrating forward driving of the top cap support unit constituting the top cap welding apparatus for cylindrical battery cells according to the present invention, and FIG. 19 is a side view illustrating backward driving of the top cap support unit constituting the top cap welding apparatus for cylindrical battery cells according to the present invention.

Referring to FIGs. 3 to 5 and 15 to 19, the top cap support unit 500 is configured to support the rear (1 o'clock position in FIG. 15) of the top cap 13, and may include a support member 510, a second driving unit 520, and a third driving unit 530.

The support member 510 is located at the rear of the top cap 13, and may be configured to support the rear of the top cap 13. Here, "located at the rear of the top cap 13" means that, when the top cap 13 is transferred to the rear of the electrode tab 12a by the top cap holder 400, the support member 510 is located at the rear of the transferred top cap 13.

The support member 510 may be in surface contact with one surface of the top cap 13 (the surface of the top cap opposite the surface of the top cap welded to the electrode tab 12a) to support the rear of the top cap 13.

In addition, the support member 510 may include a first connection member 511 for connection to the second driving unit 520, wherein the first connection member 511 supports a part of the support member 510, and may be connected to the second driving unit 520. For example, the first connection member 511 may be provided as an "L"-shaped bracket that supports a part of a circumferential surface of the support member 510 while wrapping around the same.

The second driving unit 520, which drives the support member 510 forward, may include a first cylinder unit 521, a driving member 522, a third support plate 523, a second connection member 524, and a first position detection sensor 525.

Forward driving of the support member 510 is driving for movement toward the battery case 11 (movement to the 9 o'clock position in FIG. 18), and backward driving of the support member 510 is driving for movement away from the battery case 11 (movement to the 3 o'clock position in FIG. 18).

First, the first cylinder unit 521 may include a first cylinder 521a configured to provide forward driving force to the support member 510 and a first housing 521b configured to receive the first cylinder 521a.

The first cylinder 521a is disposed in the first housing 521b, which may have an inner space in which the first cylinder 521a can reciprocate.

The first cylinder 521a includes a first cylinder rod 521a' and a first cylinder head 521a", wherein one end of the first cylinder rod 521a' may be connected to the driving member 522, and the first cylinder head 521a" may be received in the inner space of the first housing 521b.

The inner space of the first housing 521b may be divided into a 1a space 521b' and a 1a' space 521b" by the first cylinder head 521a".

Therefore, the 1a' space 521b" may always be in a pressurized state such that the first cylinder 521a received in the first housing 521b is always driven forward (9 o'clock position in FIG. 18).

In addition, the first housing 521b may be provided in one side surface thereof with a first receiving recess 521b‴ formed so as to be depressed inward, and the first position detection sensor 525 may be provided in the first receiving recess 521b‴.

Meanwhile, the first cylinder unit 521 may be provided as a hydraulic cylinder or a pneumatic cylinder known to those skilled in the art, and the case in which the first cylinder unit 521 is provided as a pneumatic cylinder will hereinafter be described.

The driving member 522 may include a vertical block 522a located on one side (3 o'clock position in FIG. 19) of the first cylinder 521a and a horizontal block 522b connected to an upper side (12 o'clock position in FIG. 15) of the vertical block 522a. In other words, the driving member 522 may be configured to wrap around one side and an upper side of the first cylinder unit 521 through the vertical block 522a and the horizontal block 522b.

The vertical block 522a of the driving member 522 is connected to one side of the first cylinder 521a, and the first cylinder 521a may be configured to transmit forward driving force to the vertical block 522a in the other direction.

The first cylinder unit 521 is connected to the vertical block 522a of the driving member 522 to transmit forward driving force to the vertical block 522a when the first cylinder 521a is driven forward to the other side (9 o'clock position in FIG. 18) by a predetermined pressure, and the driving member 522 may be driven forward by the forward driving force transmitted from the first cylinder 521a.

The first cylinder unit 521 and the driving member 522 may be provided as a table cylinder known to those skilled in the art.

The third support plate 523 is seated on the horizontal block 522b of the driving member 522, and may be driven forward and backward together with the driving member 522 when the driving member is driven forward and backward.

The second connection member 524 is seated on an upper surface of the third support plate 523, and the second connection member 524, which is seated on the upper surface of the third support plate 523, may be connected to a side surface of the first connection member 511 so as to connect the support member 510 and the third support plate 523 to each other.

For example, the second connection member 524 may be provided as an "L"-shaped bracket that connects the upper surface of the third support plate 523 and the side surface of the first connection member 511 to each other.

The second connection member 524 may be provided in one surface thereof seated on the third support plate 523 with a first long hole 524a formed so as to extend in the transfer direction (x-axis direction) in which the battery case 11 is transferred, and the second connection member 524 may be provided in the other surface thereof connected to the side surface of the first connection member 511 with a second long hole 524b formed so as to extend in the vertical direction (y-axis direction).

The position of the support member 510 in the x-axis direction and the y-axis direction may be adjusted through the first long hole 524a and the second long hole 524b. For example, when the support member 510 has x-axis deviation from the top cap 13, the x-axis position of the second connection member 524 relative to the third support plate 523 may be adjusted through the first long hole 524a, and when the support member 510 has y-axis deviation from the top cap 13, the y-axis position of the first connection member 511 relative to the second connection member 524 may be adjusted through the second long hole 524a.

In addition, although not shown in the figures, the support member 510 is provided in one surface thereof connected to the first connection member 511 with a long hole (not shown) formed so as to extend in the forward-backward direction (z-axis direction) of the support member 510, and the z-axis position of the support member 510 may be adjusted through the long hole (not shown).

As described above, the first position detection sensor 525 may be provided in the first receiving recess 521b‴ of the first housing 521b to indirectly detect the position of the support member 510. That is, the first position detection sensor 525 may detect the position of the first cylinder 521a using a magnet embedded in the first cylinder 521a, thereby detecting the position of the support member 510. For example, the magnet may be embedded in the first cylinder head 521a" of the first cylinder 521a, and the first position detection sensor 525 may detect the position of the first cylinder head 521a" using a sensor coil of the magnet embedded in the first cylinder head 521a".

The first position detection sensor 525 may transmit an information signal indicating the detected position of the first cylinder 521a to a controller (not shown). The first position detection sensor 525 may transmit information about the measured position of the first cylinder 521a to the controller through wired or wireless means, and the controller may determine whether the support member 510 is located at a set position based on the position information received from the first position detection sensor 525.

In addition, the controller (not shown) may check position information of the support member 510 in real time based on the position information received from the first position detection sensor 525. If the position of the support member 510 deviates from a predetermined range, the controller may transmit a signal indicating abnormality of the position of the support member 510 to an operator, and the signal may be displayed on an equipment monitor (e.g., a display unit) or transmitted to a terminal of the operator (e.g., a mobile phone).

The controller performs overall control such that the functions of components are normally performed. The controller may be implemented in the form of hardware, may be implemented in the form of software, or may be in the form of a combination of hardware and software. The controller may be implemented in the form of a computing device (an arithmetic device) such as a microprocessor, but is not limited thereto, and may be implemented in any of various forms that are obvious to those skilled in the art.

Meanwhile, the third driving unit 530, which is configured to drive the support member 510 backward, may include a second contact member 531, a first support block 532, a second rotary block 533, and a second rod member 534.

Specifically, the second contact member 531 is located at a side surface of the horizontal block 522b of the driving member 522, and a part of the rear (3 o'clock position in FIG. 18) of the second contact member may extend downward. Here, the second contact member 531 may be connected to the driving member 522 so as to be driven together with the driving member 522 during forward and backward driving of the driving member.

The first support block 532 is connected to the support body unit 700, and may be provided on a lower side of the first cylinder unit 521.

The second rotary block 533 is rotatably connected to a side surface of the first support block 532, and the second rotary block 533 may be in contact with a downwardly extending part of the second contact member 531 through rotation.

When rotated forward (counterclockwise in FIG. 18), the second rotary block 533 is spaced apart from the second contact member 531, thereby not restricting the forward movement of the second contact member 531. In addition, when rotated rearward (clockwise in FIG. 19), the second rotary block 533 may be in contact with the downwardly extending part of the second contact member 531, thereby driving the second contact member 531 rearward.

The second rod member 534 is connected to one end of the second rotary block 533, and the second rod member 534 may rotate the second rotary block 533 through upward and downward driving.

The third driving unit 530 may transmit rearward driving force to the support member 510 as the second rotary block 533 comes into contact with the second contact member 531 by upward driving of the second rod member 534.

For example, when the second rod member 534 is driven in the upward direction, a part of the second rotary block 533 in contact with the second contact member 531 is rotated rearward to move the second contact member 531 rearward, and the driving member 522 is moved rearward by rearward driving of the second contact member 531, whereby the support member 510 may be driven rearward.

At this time, a predetermined air pressure (or hydraulic pressure) is constantly supplied to the first cylinder unit 521, and the second rotary block 533 may have rotational force greater than the pressure supplied to the first cylinder unit 521 and may provide rearward driving force to the second contact member 531 to move the second contact member 531 rearward.

In addition, the third driving unit 530 is operated such that the second rotary block 533 is spaced apart from the second contact member 531 by downward driving of the second rod member 534, thereby not restricting the forward movement of the support member 510. When the first cylinder unit 521 is constantly supplied with predetermined air pressure (or hydraulic pressure) and thus the third driving unit 530 does not restrict the forward movement of the support member 510, the support member 510 may be driven forward.

For example, when the second rod member 534 is driven in the downward direction, a part of the second rotary block 533 in contact with the second contact member 531 is rotated forward, whereby contact between the second rotary block and the second contact member 531 is released, and the second contact member 531 is moved forward together with the driving member 522, and therefore the support member 510 may be driven forward.

As such, the forward driving force of the support member 510 is generated by the second driving unit 520 using air pressure, and the backward driving force of the support member 510 relies on the third driving unit 530, which is a cam link structure. Therefore, even if the third driving unit 530 is not operated precisely, the support member 510 always advances to the same position to support the rear of the top cap 13, thereby minimizing welding defects.

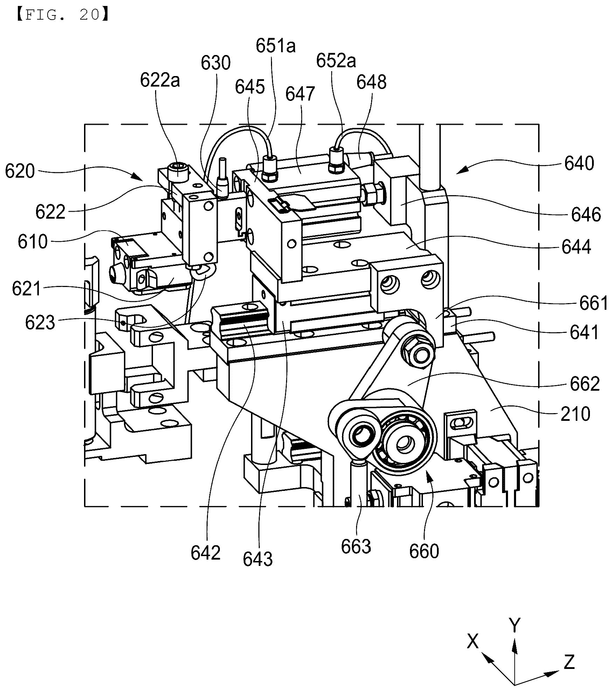

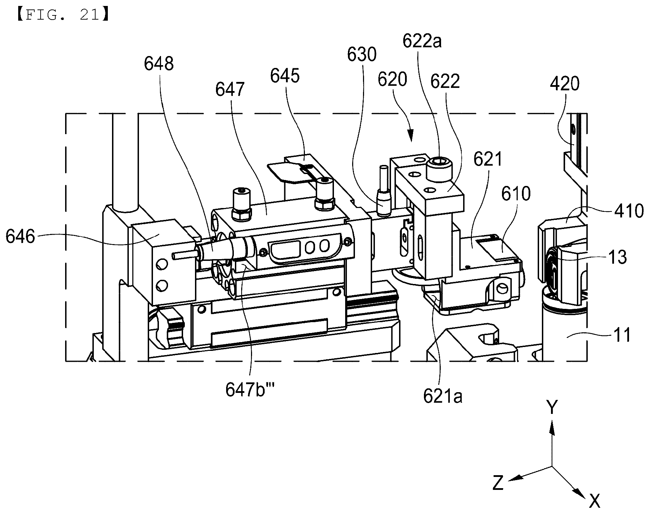

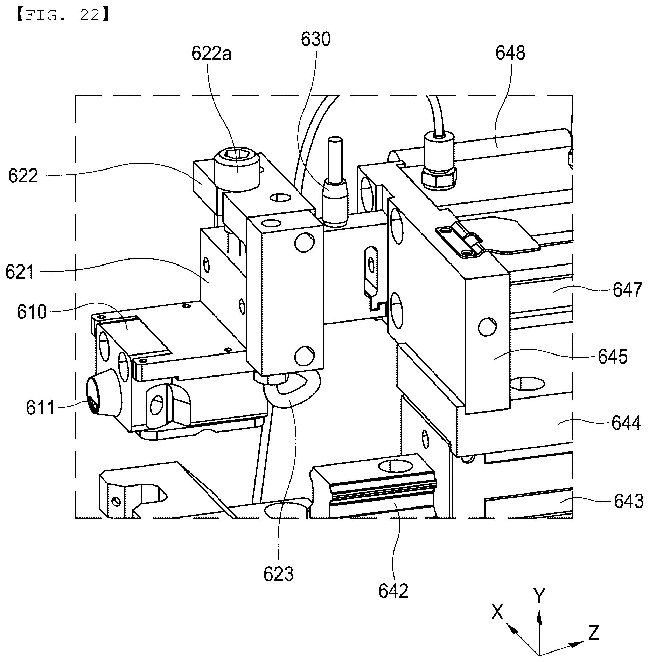

FIG. 20 is a perspective view illustrating a welding unit constituting the top cap welding apparatus for cylindrical battery cells according to the present invention when viewed from one side, FIG. 21 is a perspective view illustrating the welding unit constituting the top cap welding apparatus for cylindrical battery cells according to the present invention when viewed from the other side, and FIG. 22 is a partial enlarged perspective view of the welding unit constituting the top cap welding apparatus for cylindrical battery cells according to the present invention when viewed from one side.

Referring to FIGs. 3 to 5 and 20 to 22, the welding unit 600 may be configured to weld the electrode tab 12a and the top cap 13 to each other while pressing the electrode tab 12a firmly against the top cap 13 at a predetermined pressure.

The welding unit 600 may include a welding mask 610, a welding mask support unit 620, a load sensor 630, a fourth driving unit 640, an air supply unit 650, and a fifth driving unit 660. In addition, the welding unit 600 further includes a laser application unit (not shown) configured to apply a laser to the electrode tab 12a and the top cap 13 in order to weld the electrode tab 12a and the top cap 13 to each other.

First, the welding mask 610 may be configured to press the electrode tab 12a firmly against the top cap 13. One surface of the welding mask 610 in contact with the electrode tab 12a may protrude, and the protruding surface may be formed in a flat shape so as to press the electrode tab 12a firmly against the top cap 13.

In addition, a laser passage hole 611, through which a laser for welding the electrode tab 12a and the top cap 13 to each other passes, may be formed in the protruding surface of the welding mask 610. The welding mask 610 is already known to those skilled in the art, and therefore a detailed description thereof will be omitted.

The welding mask support unit 620, which is configured to support the welding mask 610, may include a second support block 621, a height adjustment unit 622, and a shield gas injection unit 623.

The second support block 621 is located on one side (2 o'clock position in FIG. 20) of the welding mask 610, and may be configured to support the welding mask 610. A communication hole 621a communicating with the laser passage hole 611 is formed in the second support block 621. Accordingly, a laser applied from one side of the second support block 621 sequentially passes through the communication hole 621a and the laser passage hole 611 to weld the electrode tab 12a and the top cap 13 to each other.

In addition, the second support block 621 extends from one side of the welding mask 610, and one end of the second support block extends upward. The upwardly extending part of the second support block 621 may be connected to the height adjustment unit 622.

The height adjustment unit 622 may be coupled to the top of the second support block 621 to adjust the vertical height of the second support block 621. In this case, the height adjustment unit 622 is configured to allow the second support block 621 to slide in the vertical direction (y-axis direction), and may include a height adjustment member 622a connected to an upper end of the upwardly extending part of the second support block 621 to adjust the vertical height of the second support block 621.

Here, the height adjustment member 622a may be provided as a bolt member having a male thread formed on an outer circumferential surface thereof, and a hole or recess having a female thread formed on an inner circumferential surface thereof may be formed in an upper end of the second support block 621.

Accordingly, the second support block 621 may be slidably moved upward and downward relative to the height adjustment unit 622 by the amount of rotation of the height adjustment member 622a, whereby the vertical (y-axis direction) position of the second support block may be adjusted.

The shield gas injection unit 623 may be located in the welding mask 610 to block oxygen in the welding mask 610 during welding, thereby improving welding quality and reducing debris. Here, the debris may be spatter generated during welding.

The shield gas injection unit 623 extends through the communication hole 621a formed in the second support block 621 such that one end of the shield gas injection unit is located in the welding mask 610 to block oxygen in the welding mask 610. The gas injected by the shield gas injection unit 623 may be carbon dioxide (CO₂), argon (Ar), or, more preferably, nitrogen (N₂).

The load sensor 630 is located on one side of the welding mask support unit 620, and may be configured to measure the value of load that the welding mask 610 applies to the electrode tab 12a. The load sensor 630 is located on one side surface of the height adjustment unit 622, and may be provided at a z-axis position corresponding to one surface of the welding mask 610 that protrudes so as to be in contact with the electrode tab 12a.

Although the position of the load sensor 630 does not completely coincide with the center of the welding mask 610 due to a movement path of a laser beam, it is possible to measure the value of load that the welding mask 610 applies to the electrode tab 12a with maximum accuracy by minimizing the deviation from the central axis along which the welding mask 610 presses the electrode tab 12a.

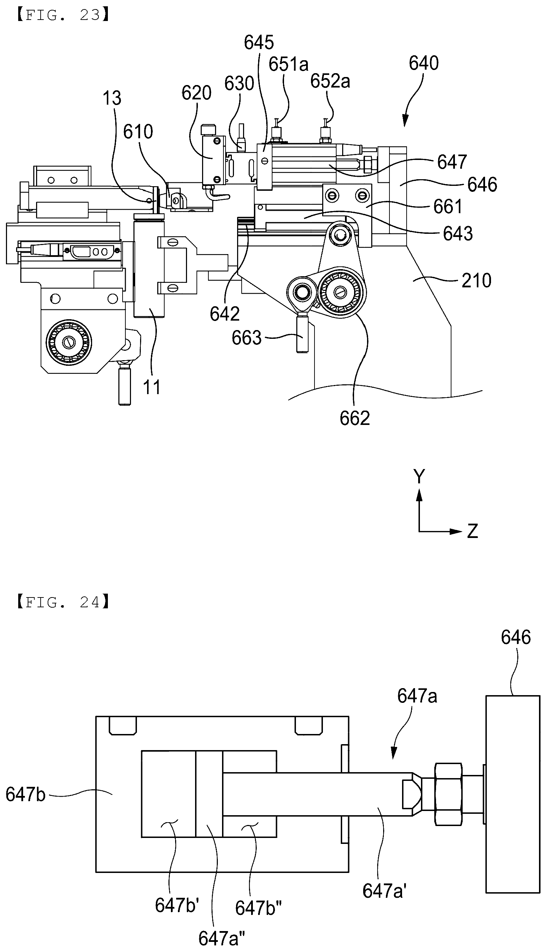

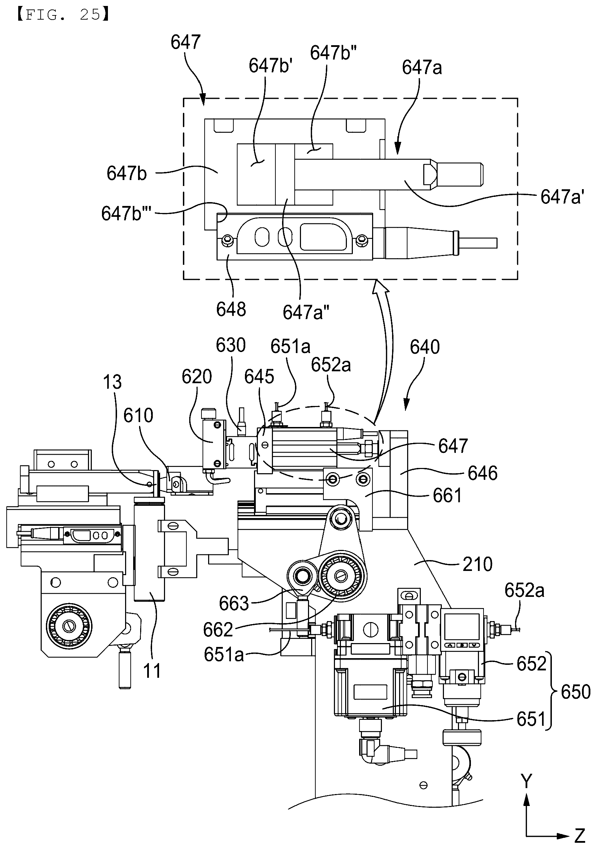

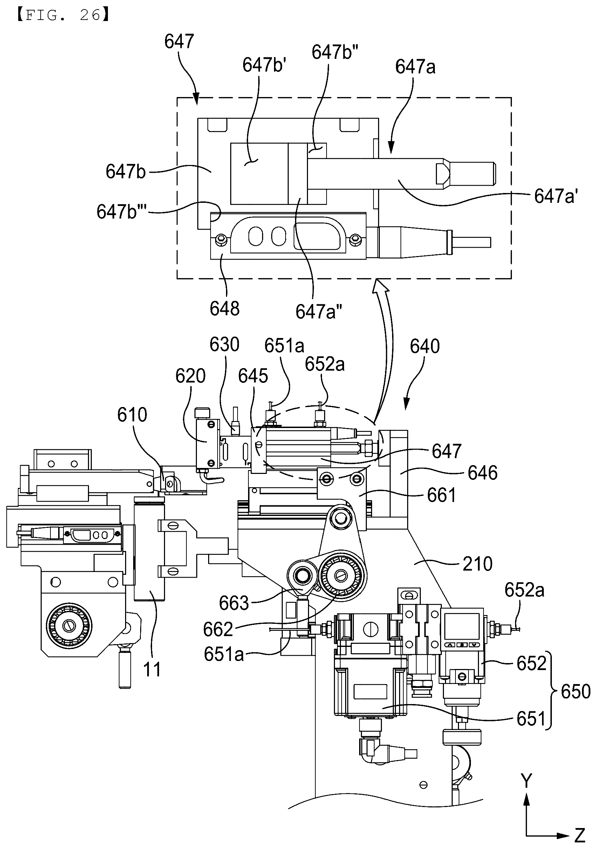

FIG. 23 is a side view illustrating forward and backward driving of the welding unit constituting the top cap welding apparatus for cylindrical battery cells according to the present invention, and FIG. 24 is an internal sectional view of a second cylinder unit constituting the top cap welding apparatus for cylindrical battery cells according to the present invention. In addition, FIG. 25 is a view illustrating a method of a second position detection sensor detecting the position of a second cylinder when a top cap is normally located in the top cap welding apparatus for cylindrical battery cells according to the present invention, and FIG. 26 is a view illustrating a method of the second position detection sensor detecting the position of the second cylinder when the top cap is not located in the top cap welding apparatus for cylindrical battery cells according to the present invention.

Referring to FIGs. 3 to 5 and 20 to 26, one end (2 o'clock position in FIG. 20) of the load sensor 630 is fixed, and the fourth driving unit 640, which drives the welding mask 610 forward or backward, may be fixed to the support frame 210 of the pressing unit 200.

Here, forward driving of the welding mask 610 is driving for movement toward the battery case 11 (movement to the 8 o'clock position in FIG. 20), and backward driving of the welding mask 610 is driving for movement away from the battery case 11 (movement to the 2 o'clock position in FIG. 20).

The fourth driving unit 640 may include a fourth support plate 641, a third guide rail 642, a third moving block 643, a fifth support plate 644, a connection plate 645, a third fixing member 646, a second cylinder unit 647, and a second position detection sensor 648.

The fourth support plate 641 is fixed to an upper end (12 o'clock position in FIG. 20) of the support frame 210, and the third guide rail 642 may be seated on and fixed to an upper surface of the fourth support plate 641.

The third guide rail 642 is provided on an upper side of the fourth support plate 641, and may be configured to guide the linear movement of the welding mask 610. Here, the linear movement of the welding mask 610 may be linear movement in a forward-backward driving direction (z-axis direction in FIG. 3) of the welding mask 610, which is orthogonal to the transfer direction (x-axis direction in FIG. 3) in which the battery case 11 is transferred.

The third guide rail 642 may be formed in the shape of a straight rail extending in the forward-backward driving direction of the welding mask 610.

The third moving block 643 may be coupled to the third guide rail 642 by interlocking engagement so as to reciprocate along a third linear movement section provided by the third guide rail 642. Here, the third linear movement section may be a section corresponding to the extension length of the third guide rail 642 or a section corresponding to the length by which the welding mask 610 is reciprocated in the forward-backward direction to press the electrode tab 12a.

The third moving block 643 may be coupled to the third guide rail 642 by interlocking engagement or male-female coupling so as to be linearly movable relative to the third guide rail, and may slide relative to the third guide rail 642.

In addition, the fifth support plate 644 is connected to the third moving block 643, and when the third moving block 643 is linearly moved relative to the third guide rail 642, the fifth support plate 644 may also be linearly moved relative to the third guide rail 642 together with the third moving block 643.

The connection plate 645 is connected to an upper surface of the fifth support plate 644, and the connection plate 645 may be connected vertically so as to be orthogonal to the fifth support plate 644. Referring to FIG. 20, a horizontal plane of the fifth support plate 644 may be parallel to an x-z plane, and the connection plate 645 may be parallel to an x-y plane.

The connection plate 645 may be provided on one side of the load sensor 630 to fix one end (2 o'clock position in FIG. 20) of the load sensor 630. That is, the connection plate 645 may be configured to connect the fifth support plate 644 and the load sensor 630 to each other.

In addition, the third fixing member 646 may be fixedly connected to the fourth support plate 641, may be connected vertically so as to be orthogonal to the fourth support plate 641, and may extend from the fourth support plate 641 to a height corresponding to the connection plate 645.

Accordingly, the second cylinder unit 647 may be connected to the connection plate 645 and the third fixing member 646 therebetween. At this time, the third fixing member 646 may be provided as a floating joint. For example, the third fixing member 646 provided as a floating joint may be connected to the second cylinder unit 647, and even if eccentricity occurs as the operating center of the second cylinder unit 647 and the operating center of a driven part do not coincide with each other, may compensate for the eccentricity such that linear movement of the second cylinder unit 647 can be smoothly performed.

The second cylinder unit 647 may include a second cylinder 647a configured to provide forward or backward driving force to the welding mask 610 and a second housing 647b configured to receive the second cylinder 647a. Here, the second cylinder unit 647 may be provided as a pneumatic cylinder.

The second cylinder 647a may be connected to the third fixing member 646 to transmit forward driving force to the connection plate 645 in the other direction such that the welding mask 610 connected to the connection plate 645 is driven forward. The second cylinder 647a may include a second cylinder rod 647a' and a second cylinder head 647a", wherein one end of the second cylinder rod 647a' may be connected to the third fixing member 646, and the second cylinder head 647a" may be received in an inner space of the second housing 647b.

The inner space of the second housing 647b may be divided into a 2a space 647b' and a 2a' space 647b" by the second cylinder head 647a" of the second cylinder 647. Here, the 2a space 647b' may be formed on the other side (9 o'clock position in FIG. 24) where the connection plate 645 is located, and the 2a' space 647b" may be formed on one side (3 o'clock position in FIG. 24) where the third fixing member 646 is located.

The second cylinder unit 647 may be configured such that the second cylinder 647a is driven forward and backward by the air pressure difference between the 2a space 647b' and the 2a' space 647b". More specifically, in the second cylinder unit 647, when the air pressure in the 2a space 647b' is higher than the air pressure in the 2a' space 647b", the second cylinder 647a may be moved toward the 2a' space 647b" by the air pressure difference, whereby the second cylinder 647a may transmit forward driving force to the connection plate 645.

Furthermore, in the second cylinder unit 647, when the air pressure in the 2a' space 647b" is higher than the air pressure in the 2a space 647b', the second cylinder 647a is moved toward the 2a space 647b' by the air pressure difference, whereby the second cylinder 647a may transmit backward driving force to the connection plate 645.

The second housing 647b may be provided in one side surface thereof with a second receiving recess 647b‴ formed so as to be depressed to the other side, and the second position detection sensor 648 may be provided in the second receiving recess 647b‴.

The second position detection sensor 648 may be provided at one side surface of the second housing 647b to detect the position of the welding mask 610. At this time, the second position detection sensor 648 may detect the position of the welding mask 610 by detecting the position of the second cylinder 647a using a magnet embedded in the second cylinder 647a. For example, the magnet may be embedded in the cylinder head 647a" of the second cylinder 647a.

The second position detection sensor 648 may transmit an information signal indicating the detected position of the second cylinder 647a to the controller (not shown). The second position detection sensor 648 may transmit information about the measured position of the second cylinder 647a to the controller through wired or wireless means, and may determine position information of the welding mask 610 in real time.

In addition, based on the position information received from the second position detection sensor 648, the controller may perform deep learning so as to be able to determine the position of the welding mask 610 when the top cap 13 is present and the position of the welding mask 610 when the top cap 13 absent at the rear (9 o'clock position in FIG. 25) of the electrode tab 12a.

For example, when the top cap holder 400 is located at the rear of the electrode tab 12a without holding the top cap 13, the controller may determine, based on the position information received from the second position detection sensor 648, that the position of the welding mask 610 has deviated from a predetermined range and thus the top cap 13 is not present at the rear of the electrode tab 12a, and may restrict application of a laser from the laser application unit (not shown).

Accordingly, it is possible to prevent a situation where the electrode tab 12a is welded in the state in which the top cap 13 is not present, thereby minimizing defects in the cylindrical battery cell 10.

The air supply unit 650 is configured to inject air into the inner space of the second housing 647b of the second cylinder 647, and may include a first air supply unit 651 and a second air supply unit 652.

The first air supply unit 651 may be configured to supply air into the 2a space 647b' of the second housing 647b. The first air supply unit 651 may include a first air supply line 651a, wherein the first air supply line 651a may be configured to connect the first air supply unit 651 and the 2a space 647b' to each other.

The first air supply unit 651 may supply or discharge air to or from the 2a space 647b' through the first air supply line 651a to adjust the air pressure in the 2a space 647b'. In this case, the first air supply unit 651 may be provided as an electro-pneumatic regulator to automatically regulate the air pressure in the 2a space 647b'.

In addition, the second air supply unit 652 may be configured to supply air to the 2a' space 647b" of the second housing 647b. The second air supply unit 652 includes a second air supply line 652a, wherein the second air supply line 652a may be configured to connect the second air supply unit 652 and the 2a' space 647b" to each other.

The second air supply unit 652 may supply or discharge air to or from the 2a' space 647b" through the second air supply line 652a to adjust the air pressure in the 2a' space 647b". In this case, the second air supply unit 652 may be provided as a precision regulator to regulate the air pressure in the 2a' space 647b".

The air supply unit 650 may create an air pressure difference between the 2a space 647b' and the 2a' space 647b" through the first air supply unit 651 such that the second cylinder unit 647 is driven forward and backward by the air pressure difference between the 2a space 647b' and the 2a' space 647b".

For example, the air supply unit 650 may adjust the air pressure value of the 2a space 647b' so as to be greater than the air pressure value of the 2a' space 647b" through the first air supply unit 651 such that the second cylinder 647a transmits forward driving force to the connection plate 645 due to the air pressure difference between the 2a space 647b' and the 2a' space 647b", whereby the welding mask 610 is driven forward.

In addition, as another example, the air supply unit 650 may adjust the air pressure value of the 2a space 647b' so as to be less than the air pressure value of the 2a' space 647b" through the first air supply unit 651 such that the second cylinder 647a transmits backward driving force to the connection plate 645 due to the air pressure difference between the 2a space 647b' and the 2a' space 647b", whereby the welding mask 610 is driven backward.

In addition, the first air supply unit 651 and the second air supply unit 652 may be provided as an electro-pneumatic regulator and a precision regulator, respectively, such that, when pressure equal to or higher than a predetermined air pressure value is applied, air is vented to regulate the pressure value to the predetermined air pressure value. Furthermore, the first air supply unit 651 and the second air supply unit 652 may automatically compensate for the pressure difference between the 2a space 647b' and the 2a' space 647b" to control forward or backward driving of the second cylinder 647a.

In addition, the first air supply unit 651 and the second air supply unit 652 may be connected to the controller (not shown) through wired or wireless means. If the air pressure values of the 2a space 647b' and the 2a' space 647b" fluctuate so as to be equal to or greater than a predetermined pressure deviation, the controller may transmit a signal indicating pressure abnormality to the operator, and the signal may be displayed on an equipment monitor (e.g., a display unit) or transmitted to a terminal of the operator (e.g., a mobile phone).

In addition, upon determining that the cylindrical battery case 11 has not been transferred to a welding position, the controller (not shown) may adjust the air pressure values through the first air supply unit 651 and the second air supply unit 652 such that the second cylinder 647a maintains a backward state of the welding mask 610 due to the air pressure difference between the 2a space 647b' and the 2a' space 647b".

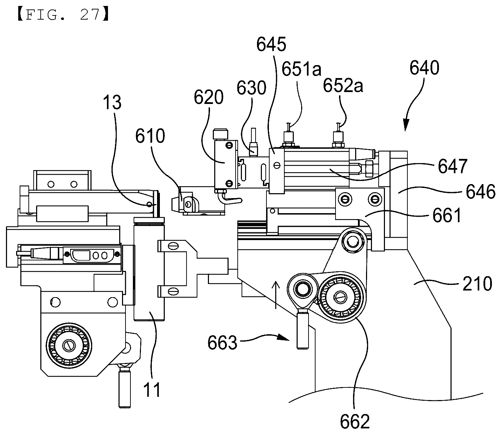

FIG. 27 is a side view illustrating another method of backwardly driving the welding unit constituting the top cap welding apparatus for cylindrical battery cells according to the present invention.

Referring to FIGs. 3 to 5 and 20 to 27, the fifth driving unit 660 of the welding unit 600 is configured to drive the welding mask 610 backward, and may include a third contact member 661, a third rotary block 662, and a third rod member 663.

In particular, the fifth driving unit 660 may be used when a problem occurs with the apparatus or for purposes such as maintenance.

The third contact member 661 is located at a side surface of the fifth support plate 644, and a part of the rear (3 o'clock position in FIG. 25) of the third contact member may extend downward.

Here, the third contact member 661 may be connected to the fifth support plate 644 so as to be driven together with the fifth support plate 644 during forward and backward driving of the fifth support plate. At this time, the fifth support plate 644 is connected to the third moving block 643 and is driven forward and backward together with the third moving block 643, and therefore the third contact member 661 may also be driven forward and backward together with the third moving block 643.

The third rotary block 662 is rotatably connected to a side surface of the support frame 210, and may be in contact with a downwardly extending part of the third contact member 661 through rotation.

When rotated rearward (clockwise in FIG. 27), the third rotary block 662 may be in contact with the downwardly extending part of the third contact member 661, thereby driving the third contact member 661 rearward. In addition, when rotated forward (counterclockwise in FIG. 23), the third rotary block 662 is spaced apart from the third contact member 661, thereby not restricting the forward movement of the third contact member 661.

The third rod member 663 is connected to one end of the third rotary block 662, and the third rod member 663 may rotate the third rotary block 662 through upward and downward driving.

The fifth driving unit 660 may transmit rearward driving force to the welding mask 610 as the third rotary block 662 comes into contact with the third contact member 661 by upward and downward driving of the third rod member 663.

For example, when the third rod member 663 is driven in the upward direction, a part of the third rotary block 662 in contact with the third contact member 661 is rotated rearward to move the third contact member 661 rearward, and the fifth support plate 644 is moved rearward by rearward driving of the third contact member 631, whereby the welding mask 610 may be driven rearward.

At this time, the third rotary block 662 may have rotational force greater than the forward pressure supplied to the second cylinder unit 647 and may provide rearward driving force to the third contact member 661 to move the third contact member 661 rearward.

In addition, the fifth driving unit 660 may be configured such that the third rotary block 662 is spaced apart from the third contact member 661 by downward driving of the third rod member 663, thereby not restricting the forward movement of the welding mask 610. When the third rotary block 662 is spaced apart from the third contact member 661 and thus does not restrict the forward movement of the third contact member 661, the welding mask 610 may be driven forward by the second cylinder unit 647.

Hereinafter, a top cap welding method for cylindrical battery cells using the top cap welding apparatus for cylindrical battery cells having the aforementioned configurations will be described.

Referring to FIGs. 3 to 27, the top cap welding method for cylindrical battery cells according to the present invention includes (S1) a step of transferring a battery case 11 to one side or the other side through the transfer unit 100, (S2) a step of locating a top cap 13 at the rear of an electrode tab 12a through the top cap holder 400, (S3) a step of supporting the rear of the top cap 13 through the top cap support unit 500, (S4) a step of pressing the battery case 11 rearward through the pressing unit 200, and (S5) a step of welding the top cap 13 and the electrode tab 12a to each other through the welding unit 600.

In step (S3), the top cap support unit 500 may drive the support member 510 forward toward one surface of the top cap 13 through the second driving unit 520 such that the support member 510 supports the rear of the top cap 13.

In step (S4), the pressing unit 200 drives the pusher unit 220 forward toward the battery case 11 through the first driving unit 240. At this time, the pusher unit 220 may control the position of the battery case 11 such that the electrode tab 12a corresponds to the welding position of the top cap 13 when pressing the battery case 11 toward the support unit 300.

In addition, step (S4) may include a step of the welding unit 600 pressing the electrode tab 12a toward the top cap 13 such that the electrode tab 12a and the top cap 13 are in tight contact with each other. At this time, the welding unit 600 may drive the welding mask 610 forward toward the electrode tab 12a through the fourth driving unit 640 such that the electrode tab 12a and the top cap 13 are in tight contact with each other.

After step (S5), the pressing unit 200 may drive the pusher unit 220 backward through the first driving unit 240 such that pusher unit is spaced apart from the battery case 11. In addition, the top cap support unit 500 may drive the support member 510 backward through the third driving unit 530 such that the support member is spaced apart from the top cap 13. Furthermore, the welding unit 600 may drive the welding mask 610 backward through the fourth driving unit 640 or the fifth driving unit 660 such that the welding mask is spaced apart from the electrode tab 12a.

In steps (S2) to (S5), transferring the battery case 11 to one side or the other side through the transfer unit 100 may be temporarily suspended, and after step (S5), steps (S1) to (S5) may be repeated.

Although the specific details of the present invention have been described in detail, those skilled in the art will appreciate that the detailed description thereof discloses only preferred embodiments of the present invention and thus does not limit the scope of the present invention. Accordingly, those skilled in the art will appreciate that various changes and modifications are possible, without departing from the category and the technical idea of the present invention, and it will be obvious that such changes and modifications fall within the scope of the appended claims.

### (Description of Reference Symbols)

10: Cylindrical battery cell
11: Battery case
12: Electrode assembly 12a: Electrode tab
13: Top cap
100: Transfer unit
110: Transfer line
120: Seating unit
121: Seating plate 122: Gripper member
123: Connection portion
200: Pressing unit
210: Support frame
220: Pusher unit
221: Pusher member
221a: First recess 221b: Second recess
222: Centering member
222a: First hole 222b: Second hole
223: Guide block 223a: Guide recess
223a': Clearance portion 223a": Alignment portion
224: Rotary shaft
224a: Shaft member 224b: First bearing member
224c: Shaft cover
224c': First cover 224c": Second cover
230: Guide member
231: Guide shaft
231a: First guide shaft 231b: Second guide shaft
232: Second bearing member
240: First driving unit
241: First support plate 242: First guide rail
243: First moving block 244: Second support plate
245: First contact member 245a: First cutout portion
246: First rotary block
247: First rod member
250: Angle adjustment unit
251: Second guide rail 252: Second moving block
253: First fixing member
253a: Third recess 253b: Third hole
253c: Fourth hole
254: Connection block 254a: Second cutout portion
255: Support shaft
255a: First support shaft 255b: Second support shaft
256: Elastic member
256a: First elastic member 256b: Second elastic member
257: Second fixing member
258: Bolt member
258a: First bolt member 258b: Second bolt member
300: Support unit 310: Fourth recess
400: Top cap holder
410: Jig unit 420: Driving unit
500: Top cap support unit
510: Support member 511: First connection member
520: Second driving unit
521: First cylinder unit
521a: First cylinder
521a': First cylinder rod 521a": First cylinder head
521b: First housing
521b': 1a space 521b": 1a' space
521b‴: First receiving recess
522: Driving member
522a: Vertical block 522b: Horizontal block
523: Third support plate
524: Second connection member
524a: First long hole 524b: Second long hole
525: First position detection sensor
530: Third driving unit
531: Second contact member 532: First support block
533: Second rotary block 534: Second rod member
600: Welding unit
610: Welding mask
611: Laser passage hole
620: Welding mask support unit
621: Second support block 621a: Communication hole
622: Height adjustment unit 622a: Height adjustment member
623: Shield gas injection unit
630: Load sensor
640: Fourth driving unit
641: Fourth support plate 642: Third guide rail
643: Third moving block 644: Fifth support plate
645: Connection plate 646: Third fixing member
647: Second cylinder unit
647a: Second cylinder
647a': Cylinder rod 647a": Cylinder head
647b: Second housing
647b': 2a space 647b": 2a' space
647b‴: Second receiving recess
648: Second position detection sensor
650: Air supply unit
651: First air supply unit 652: Second air supply unit
660: Fifth driving unit
661: Third contact member 662: Third rotary block
663: Third rod member
700: Support body unit

## Claims

1. A top cap welding apparatus for cylindrical battery cells, the top cap welding apparatus comprising:
a transfer unit configured to move a cylindrical battery case in which an electrode assembly having an outwardly exposed electrode tab is received;
a pressing unit disposed in front of the battery case, the pressing unit being configured to press the battery case;
a support unit disposed at a rear of the battery case, the support unit being configured to support the battery case;
a top cap holder configured to locate a top cap at a rear of the electrode tab;
a top cap support unit configured to support a rear of the top cap; and
a welding unit configured to weld the electrode tab and the top cap to each other while pressing the electrode tab against the top cap at a predetermined pressure.

2. The top cap welding apparatus according to claim 1, wherein the welding unit comprises:
a welding mask configured to press the electrode tab against the top cap;
a welding mask support unit configured to support the welding mask;
a load sensor disposed on one side of the welding mask support unit, the load sensor being configured to measure a value of load that the welding mask applies to the electrode tab; and
a fourth driving unit configured to drive the welding mask forward or backward.

3. The top cap welding apparatus according to claim 2, wherein the welding mask support unit comprises:
a second support block disposed on one side of the welding mask, the second support block being configured to support the welding mask; and
a height adjustment unit coupled to a top of the second support block, the height adjustment unit being configured to adjust a vertical height of the second support block.

4. The top cap welding apparatus according to claim 3, wherein
the second support block extends from one side of the welding mask, one end of the second support block extending upward, and
the height adjustment unit comprises a height adjustment member connected to an upper end of the second support block, the height adjustment member being configured to adjust the vertical height of the second support block.

5. The top cap welding apparatus according to claim 3, wherein
the welding mask is provided with a laser passage hole configured to allow a laser for welding the electrode tab and the top cap to pass therethrough, and
the second support block is provided with a communication hole communicating with the laser passage hole.

6. The top cap welding apparatus according to claim 5, wherein the welding mask support unit further comprises a shield gas injection unit disposed in the welding mask, the shield gas injection unit being configured to remove debris generated during welding.

7. The top cap welding apparatus according to claim 2, wherein
the pressing unit comprises a support frame, and
the fourth driving unit comprises:
a fourth support plate fixed to the support frame;
a third guide rail disposed on an upper side of the fourth support plate, the third guide rail being configured to guide linear movement of the welding mask;
a third moving block coupled to the third guide rail by interlocking engagement, the third moving block being configured to reciprocate along a third linear movement section provided by the third guide rail;
a fifth support plate connected to the third moving block; and
a connection plate connected to an upper side of the fifth support plate, the connection plate being connected to one side of the load sensor.

8. The top cap welding apparatus according to claim 7, wherein
the fourth driving unit further comprises:
a third fixing member fixedly connected to the fourth support plate; and
a second cylinder unit, and
the second cylinder unit comprises a second cylinder connected to the connection plate and the third fixing member therebetween, the second cylinder being configured to provide forward or backward driving force to the welding mask, and a second housing configured to receive the second cylinder.

9. The top cap welding apparatus according to claim 8, wherein the second cylinder is connected to the third fixing member to transmit forward driving force to the connection plate in the other direction.

10. The top cap welding apparatus according to claim 8, wherein the welding unit further comprises an air supply unit configured to inject air into an inner space of the second housing.

11. The top cap welding apparatus according to claim 10, wherein
the inner space of the second housing is divided into a 2a space and a 2a' space by the second cylinder, and
the air supply unit comprises a first air supply unit configured to supply air into the 2a space and a second air supply unit configured to supply air into the 2a' space.

12. The top cap welding apparatus according to claim 11, wherein the second cylinder unit is configured such that the second cylinder is driven forward and backward by an air pressure difference between the 2a space and the 2a' space.

13. The top cap welding apparatus according to claim 8, wherein
the second housing is disposed on one side surface thereof with a second receiving recess formed so as to be depressed inward, and
the fourth driving unit further comprises a second position detection sensor disposed in the second receiving recess, the second position detection sensor being configured to detect a position of the welding mask.

14. The top cap welding apparatus according to claim 7, wherein
the welding unit further comprises a fifth driving unit configured to drive the welding mask rearward, and
the fifth driving unit comprises:
a third contact member located at a side surface of the fifth support plate, a part of a rear of the third contact member extending downward;
a third rotary block rotatably connected to a side surface of the support frame, the third rotary block being in contact with the downwardly extending part of the third contact member; and
a third rod member connected to one end of the third rotary block, the third rod member being configured to rotate the third rotary block through upward and downward driving.

15. A top cap welding method for cylindrical battery cells using the top cap welding apparatus according to any one of claims 1 to 14, the top cap welding method comprising:
(S1) transferring a battery case to one side or the other side through the transfer unit;
(S2) locating a top cap at a rear of an electrode tab through the top cap holder;
(S3) supporting a rear of the top cap through the top cap support unit;
(S4) pressing the battery case rearward through the pressing unit; and
(S5) welding the top cap and the electrode tab to each other through the welding unit.
